(19) Europäisches Patentamt
European Patent Office
Office européen des brevets

(11) **EP 2 157 138 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(51) Int Cl.:
***C09C 1/62*** *(2006.01)*

(21) Anmeldenummer: **08009556.5**

(22) Anmeldetag: **26.05.2008**

(54) **Dünne, plättchenförmige Eisenpigmente, Verfahren zu deren Herstellung und Verwendung derselben**

Thin, platy iron pigments, method for their manufacture and use

Pigments de fer fins, en forme de paillettes, leur procédé de fabrication et leur utilisation

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**24.02.2010 Patentblatt 2010/08**

(73) Patentinhaber: **Eckart GmbH**
**91235 Hartenstein (DE)**

(72) Erfinder:
• **Schlegl, Thomas**
**91245 Simmelsdorf (DE)**

• **Trummer, Stefan Dr.**
**90480 Nürnberg (DE)**

(74) Vertreter: **Walcher, Armin et al**
**Louis, Pöhlau, Lohrentz**
**Postfach 3055**
**90014 Nürnberg (DE)**

(56) Entgegenhaltungen:
**EP-A- 1 621 586      DE-A1- 10 114 446**
**DE-A1-102005 020 763      DE-A1-102006 062 270**

**Beschreibung**

Die Erfindung betrifft dünne, plättchenförmige Eisenpigmente, deren Herstellung und Verwendung.

Effektpigmentplättchen aus Eisen, auch als Eisenflakes oder Eiseneffektpigmente bezeichnet, werden vor allem aufgrund ihrer magnetischen Orientierbarkeit im dekorativen Bereich eingesetzt. Durch eine Orientierung der Eisenpigmente entlang der Magnetfeldlinien im noch flüssigen Applikationsmedium können sehr attraktive 3D-Effekte oder Hologramme erzeugt werden.

Die Herstellung von plättchenförmigen Eisenpigmenten durch Trocken- oder Nassvermahlung von reduzierend behandeltem Carbonyleisenpulver in Gegenwart von Mahlhilfsstoffen mit einer insbesondere für den Automobillack gewünschten Größe und einer von Aluminiumpigmenten bekannten "Silberdollarform" wird beispielsweise in der DE 101 14 446 A1 ausführlich beschrieben.

Bei diesem bekannten Vermahlungsprozess werden die Grießpartikel zu Eisenplättchen mechanisch verformt und nicht zerkleinert. Um ein Kaltverschweißen der Eisenteilchen beim Vermahlen zu verhindern, wird ein Schmiermittel, beispielsweise eine Fettsäure wie Stearin- oder Ölsäure, zugesetzt. Diese mit einer Inhibitorbeschichtung, bestehend aus einer passivierenden Korrosionsschutzbeschichtung und einer Inhibitorschicht, versehenen Pigmentplättchen aus Eisen weisen eine mittlere Teilchengröße von 5 bis 100 $\mu$m und eine mittlere Teilchendicke von 500 bis 30 nm auf. Obwohl in dieser Schrift die Herstellung optisch anspruchsvoller Effektpigmente mit hohem Flop beschrieben wurden, haben sich entsprechende Produkte nicht am Markt aufgrund ihrer optischen Eigenschaften durchsetzen können. So wird das Produkt Ferricon 200 (Fa. Eckart) nur aufgrund seiner magnetischen Eigenschaften, die eine Ausrichtung der Pigmentplättchen im Magnetfeld und hieraus resultierend interessante 3D-Effekte ermöglichen, verkauft. Als ein normales Effektpigment jedoch, welches aufgrund seiner planparallelen Orientierung in einem Anwendungsmedium wirkt, konnte es bisher kein Interesse finden.

Gegenüber hochbrillanten Aluminiumpigmenten war der Farbton aufgrund der geringeren Reflektivität des Eisens zu matt und dunkel.

Auch im Druckfarbenbereich konnte das Pigment bisher keine Anwendung als reines Effektpigment finden. Insbesondere in der sogenannten Rückseitenapplikation, konnte es bisher nicht befriedigen. Mit PVD-Aluminiumpigmenten können hingegen in der Rückseitenapplikation regelrechte Spiegeleffekte erzeugt werden.

Andererseits besteht ein hoher Bedarf am Markt an schwarzen, glänzenden metallischen Effektpigmenten. Die aus der DE 101 14 446 A1 bekannten Eiseneffektpigmente genügen diesem Bedarf in bezug auf Glanz und Dunkelheit oder Schwärze nicht.

Aus der DE 101 14 445 A1 sind weiterhin mit Metalloxiden beschichtete Eiseneffektpigmente bekannt

Aus der DE 10 2007 007908 A1 sind dunkle, schwarze Metalleffektpigmente bekannt. Diese sind jedoch nur über PVD-Verfahren zugänglich, wobei in den hergestellten Metalleffektpigmenten ein definierter Gehalt an Sauerstoff eingestellt werden muß, und damit sehr teuer und aufwändig in der Herstellung.

Aus DE 103 15 775 A1 sind mit Fettsäure und optional mit einer passivierenden Inhibitor- oder Korrosionsschutzschicht belegte Aluminiumpigmente mit einer mittleren Dicke von 30 bis 100 nm bekannt.

Schließlich wird in EP 1 621 586 A1 ein plättchenförmiges Aluminiumpigment mit einem ausgeprägten Metallglanz und einer feinen Kornverteilung beschrieben. Dieses Aluminiumpigment weist eine mittlere Dicke von 0,025 bis 0,08 $\mu$m und einen mittleren Partikeldurchmesser ($D_{50}$) von 8 bis 30 $\mu$m auf.

Aufgabe der vorliegenden Erfindung ist es, Eiseneffektpigmente mit verbesserten optischen Eigenschaften zur Verfügung zu stellen. Die Pigmente sollen insbesondere besseren Glanz und Helligkeitsflop sowie einen dunkleren Farbton bis hin zu einem schwarzen Metalleffektpigment aufweisen. Des Weiteren sollen diese Effektpigmente über ein technisch einfaches Verfahren hergestellt werden können.

Die Aufgabe wird gelöst durch die Bereitstellung von Eiseneffektpigmenten, welche eine über Dickenauszählung mit Rasterelektronenmikroskopie (REM) ermittelte Dickenverteilung in der Darstellung als Summendurchgangsverteilung

a) einen $h_{50}$-Wert aus einem Bereich von 10 bis 55 nm

b) einen $h_{90}$-Wert aus einem Bereich von 20 bis 80 nm aufweisen.

Bevorzugte Weiterbildungen der erfindungsgemäßen Eiseneffektpigmente sind in den Unteransprüchen 2 bis 8 angegeben.

Die der Erfindung zugrunde liegende Aufgabe wird weiterhin durch ein Verfahren zur Herstellung von Eiseneffektpigmenten nach einem der Ansprüche 1 bis 8 gelöst, das folgenden Schritt umfasst:

Vermahlen eines Eisengrießes mit einer Korngrößenverteilung welche einen $d_{10} < 2,0$ $\mu$m, einen $d_{50} < 5,0$ $\mu$m und einen $d_{90} < 7,0$ $\mu$m aufweist unter Verwendung eines Mahlwerks in Gegenwart von Lösemittel und Schmierstoffen und kugelförmigen Mahlkörpern.

Bevorzugte Weiterbildungen des Verfahrens sind in den Unteransprüchen 9 bis 13 angegeben.

Die erfindungsgemäße Aufgabe wird ferner durch die Verwendung der erfindungsgemäßen Eiseneffektpigmente als Effektpigment in Coatings, Anstrichen, Lacken, Druckfarben, Pulverlacken, Kunststoffen, Wertschriften- und Sicherheitsdrucken, Kosmetik und Reflektormaterial bei der Herstellung mehrschichtiger Effektpigmente gelöst.

Vorzugsweise werden die erfindungsgemäßen Eiseneffektpigmente als magnetisch orientierbares Effektpigment in Coatings, Anstrichen, Lacken, Druckfarben, Pulverlacken, Kunststoffen, Wertschriften- und Sicherheitsdrucken oder kosmetischen Anwendungen verwendet.

Ferner wird die der Erfindung zugrunde liegende Aufgabe auch durch Bereitstellung eines beschichteten Gegenstand, der Eiseneffektpigmente nach einem der Ansprüche 1 bis 8 enthält und/oder aufweist, vorzugsweise mit den erfindungsgemäßen Eiseneffektpigmenten oder einem Beschichtungsmittel, das die erfindungsgemäßen Eiseneffektpigmente enthält, beschichtet ist.

Schließlich wird die Aufgabe durch Bereitstellung einer Druckfarbe, die die erfindungsgemäßen Eiseneffektpigmente nach einem der Ansprüche 1 bis 8 enthält, gelöst.

Im folgenden werden die Begriffe Eisenpigmente und Eiseneffektpigmente austauschbar verwendet

Unter Eiseneffektpigmenten werden plättchenförmige Eisenpigmente verstanden. Diese Eiseneffektpigmente sind aufgrund der Plättchenform in der Lage einfallendes Licht gerichtet zu reflektieren, mithin spiegelartig zu wirken.

Diese neuartigen Pigmente weisen bei Eiseneffektpigmenten bisher in der Summe nicht erreichte Eigenschaften, insbesondere Glanz, Flop, Deckkraft (Deckvermögen) und einen dunkleren Metallton auf.

Es hat sich überraschend herausgestellt, dass Eiseneffektpigmente, die eine enge Dickenverteilung, wie in Anspruch 1 angegeben, aufweisen, unerwartete Glanzeigenschaften in Verbindung mit Dunkelheit bzw. Schwärze aufweisen.

Im Unterschied zu den Eiseneffektpigmenten, die aus der DE 10114 446 A1 bekannt sind, sind die erfindungsgemäßen Eiseneffektpigmente nicht matt, sondern glänzend. Darüber sind die erfindungsgemäßen Eiseneffektpigmente, verglichen mit den Eiseneffektpigmenten gemäß der Lehre der DE 101 14 446 A1, dunkler bzw. schwärzer.

Obgleich es bislang keine wissenschaftliche Erklärung für dieses Phänomen gibt, wird vermutet, dass diese besonderen optischen Effekte mit der in Anspruch 1 angegebenen engen Dickenverteilung sowie den angegebenen absoluten Dicken zusammenhängen.

Die erfindungsgemäßen Eiseneffektpigmente stapeln sich gleichmäßiger im Anwendungsmedium als herkömmliche Eisenpigmente. Bei den herkömmlichen Eisenpigmenten kann es leicht zu Ungleichmäßigkeiten in der Stapelung der Pigmente kommen. So können insbesondere sehr dicke Pigmente als "Abstandshalter" wirken, welche die Orientierung der umgebenden bzw. benachbart liegenden Elseneffektpigmente beeinträchtigt.

Hiervon werden Glanz sowie Flop und unter Umständen das Deckvermögen nachteilig beeinflußt.

Die erfindungsgemäßen Eiseneffektpigmente weisen einen Gehalt an Eisen von vorzugsweise wenigstens 80 - 90 Gew.-%, weiter bevorzugt von wenigstens 81- 87 Gew.-% und besonders bevorzugt von wenigstens 82 - 86 Gew.-%, auf.

Die vorgenannten Angaben an Gew.-% beziehen sich jeweils auf dass Gesamtgewicht der Eiseneffektpigmente.

Weiterhin ist bevorzugt, dass der Gehalt an Sauerstoff des plättchenförmigen Eisenkemes der erfindungsgemäßen Eiseneffektpigmenten 10 bis 20 Atom-%, und noch weiter bevorzugt 13 bis 19 Atom-% und ganz besonders bevorzugt 14 bis 18 Atom-% beträgt.

Der relativ hohe Sauerstoffgehalt ist dadurch erklärbar, dass die Pigmente extrem dünn sind und mithin hohe spezifische Oberflächen aufweisen. Die sich an der Oberfläche auf natürliche Weise bildende Eisenoxidschicht trägt zu den relativ hohen Sauerstoffgehalten bei.

Der Gehalt an Eisen und Sauerstoff der erfindungsgemäßen Eiseneffektpigmente beträgt bevorzugt mindestens 98 Gew.-%, weiter bevorzugt mindestens 97 Gew.-% und besonders bevorzugt mindestens 98 Gew.-% bezogen auf des gesamte Eiseneffektpigment. Ansonsten können selbstverständlich natürlich vorkommende Verunreinigungen wie beispielsweise Silicium in kleinen Mengen vorhanden sein.

Die Bestimmung der exakten mittleren Dicke von plättchenförmigen Metallpigmenten ist schwierig. In der Praxis erfolgt die Pigmentdickenbestimmung über den Wasserbedeckungsgrad (Spreitung gemäß DIN 55923) und/oder durch die Rasterelektronenmikroskopie (REM). Mit dem Wasserbedeckungsgrad lässt sich lediglich eine mittlere Dicke h der Pigmente berechnen, nicht aber die Dickenverteilung. Um irreversible Agglomerationen auszuschließen, wurde im Rahmen dieser Erfindung die mittlere Dicke der erfindungsgemäßen Eiseneffektpigmente mittels Rasterelektronenmikroskopie (REM) bestimmt Bei dieser Methode werden so viele Teilchen vermessen, dass eine repräsentative statistische Auswertung vorgenommen werden kann. Üblicherweise werden etwa 100 Teilchen vermessen. Die Dickenverteilung wird zweckmäßigerweise in Form einer Summendurchgangskurve dargestellt. Als "Mittelwert" bietet sich der $h_{50}$-Wert der Dickensummendurchgangskurve an. Ein Maß für den Grobanteil ist der $h_{90}$-Wert. Der $h_{90}$-Wert besagt, dass 90 % aller Pigmentteilchen eine Dicke unterhalb dieses Wertes besitzen. Entsprechend besagt beispielsweise ein $h_{99}$-Wert, dass 99 % aller Pigmentteilchen eine Dicke unterhalb dieses Wertes besitzen. In analoger Weise ist der $h_{10}$-Wert ein Maß für den Feinanteil der Dickenverteilung, der besagt, dass 10 % aller Pigmentteilchen eine Dicke unterhalb dieses Wertes besitzen.

Diese Werte können rechnerisch aus einer Liste der gemessenen Einzelwerte ermittelt werden, so z.B. mit Hilfe der "Quantil"-Funktion in einer Excel-Darstellung. Die Ermittlung der Dicken der einzelnen Pigmente mittels REM erfolgt nach der in der DE 103 15 775 A1 beschriebenen Methode.

Die erfindungsgemäßen Eiseneffektpigmente weisen eine über Dickenauszählung mit Rasterelektronenmikroskopie (REM) ermittelte Dickenverteilung, die in der Darstellung als Summendurchgangsverteilung einen $h_{50}$-Wert aus einem Bereich von 10 bis 55 nm, bevorzugt von 12 bis 50 nm, besonders bevorzugt von 14 bis 45 nm und ganz besonders bevorzugt von 15 bis unter 40 nm, aufweist, auf.

Unterhalb einer mittleren Dicke $h_{50}$ von 10 nm werden die Eiseneffektpigmente zu dunkel, was auf den Verlust des metallischen Reflexionsvermögens unter Beibehaltung der hohen Absorptionseigenschaften des Eisens zurückzuführen ist. Außerdem werden die Eiseneffektpigmente mechanisch zu labil, um noch in geeigneter Weise verarbeitet werden zu können. Zudem nimmt die Deckfähigkeit ab. Oberhalb einer mittleren Dicke $h_{50}$ von 55 nm sind die vorteilhaften optischen Eigenschaften, d.h. Glanz in Verbindung mit Dunkelheit oder Schwärze, nicht mehr vorhanden.

Weiterhin weisen die erfindungsgemäßen Pigmente einen $h_{90}$-Wert aus einem Bereich von 20 bis 80 nm, bevorzugt von 22 bis 70 nm, und besonders bevorzugt von 25 bis 60 nm auf.

Oberhalb eines $h_{90}$-Wertes von 80 nm waren die vorteilhaften Eigenschaften der Eiseneffektpigmente nicht mehr zu beobachten. Insbesondere konnte der sehr dunkle Farbton bei steileren Betrachtungswinkeln nicht mehr festgestellt werden.

Eiseneffektpigmente mit einem $h_{90}$-Wert von unter 20 nm können bislang nicht mittels Vermahlung wirtschaftlich hergestellt werden. Metalleffektpigmente mit derart engen Dickenverteilungen sind bisher nur über PVD-Verfahren zugänglich. Eisen wiederum ist aufgrund seines hohen Schmelzpunktes nur schwer verdampfbar. Aus diesem Grund sind bisher keine mittels PVD-Verfahren hergestellten Eiseneffektpigmente kommerziell erhältlich.

Offensichtlich beruhen die vorteilhaften optischen Eigenschaften der erfindungsgemäßen Eisenpigmente auf einer geringen Dicke aller Eiseneffektpigmente in der Pigmentdickenverteilung. Insbesondere dürfen weitgehend keine dickeren Pigmente oberhalb von ca. 100 nm vorkommen. Daher ist bevorzugt der $h_{98}$-Wert kleiner als 100 nm, weiter bevorzugt kleiner als 90 nm, besonders bevorzugt kleiner als 80 nm und ganz besonders bevorzugt kleiner als 70 nm.

Bei einer weiteren bevorzugten Ausführungsform weisen die erfindungsgemäßen Eiseneffektpigmente eine mittlere Dicke $h_{50}$ aus einem Bereich von 15 bis 45 nm und einen $h_{90}$-Wert aus einem Bereich von 25 bis 60 nm auf. Bei einer weiteren besonders bevorzugten Ausführungsform der erfindungsgemäßen Eiseneffektpigmente weisen diese eine mittlere Dicke $h_{50}$ ($h_{50}$-Wert) aus einem Bereich von 20 bis 40 nm und einen $h_{90}$-Wert aus einem Bereich von 30 bis 50 nm auf.

Die geringen Dicken der erfindungsgemäßen Eiseneffektpigmente bewirken vorteilhaft eine sehr gute Stapelung der Pigmente im Anwendungsmedium, beispielsweise einem Lack oder einer Druckfarbe. Mit den erfindungsgemäßen Pigmenten können beispielsweise deckende Lackierungen mit sehr geringen Schichtdicken, beispielsweise einer Schichtdicke von weniger als 10 $\mu$m, mit hohem Glanz und dunklem Flop hergestellt werden.

Insbesondere in der Automobiliackierung besteht, insbesondere im Hinblick auf Kosteneinsparungsgründen, ein Bedürfnis nach geringen Schichtdicken. Bislang liegen Basislackschichtdicken in einem Bereich von etwa 15 $\mu$m. Bereits jetzt sind an sehr gebogenen Formkörpern standardmäßig auch geringere Schichtdicken üblich. Aus Kostengründen wären Schichtdicken von weniger als 10 $\mu$m besonders vorteilhaft.

Bei Druckfarben sind die Schichtdicken generell sehr viel niedriger als bei Lacken.

Dies trifft insbesondere für Tiefdruckfarben zu. Mit konventionellen Eiseneffektpigmenten pigmentierte Tiefdruckfarben weisen einen Festkörpergehalt von ca. 40 Gew.-% auf. Druckfilme hingegen weisen eine Nassfilmbeschichtung von ca. 3 bis 6 $\mu$m und eine Trockenfilmschichtdicke von nur ca. 1,5 bis 3 $\mu$m auf. Somit können die erfindungsgemäßen Eiseneffektpigmente aufgrund der sehr geringen Dicke und der engen Dickenverteilung äußerst vorteilhaft in Druckfarben bzw. Druckfilmen verwendet werden.

Bei weiter bevorzugten Ausführungsformen weisen die erfindungsgemäßen Eiseneffektpigmente einen $h_{10}$-Wert der Dickenverteilung aus einem Bereich von 8 bis 40 nm, weiter bevorzugt von 10 bis 35 nm und besonders bevorzugt aus einem Bereich von 15 bis 33 nm auf. Unterhalb eines $h_{10}$-Wertes von 8 nm sind die Eiseneffektpigmente auch meist zu klein in bezug auf die Größenverteilung (Feinanteil), was zu einem starken Streulichtanteil und damit zu verschlechterten optischen Eigenschaften führt. Oberhalb eines $h_{10}$-Wertes von 40 nm sind die Pigmente wiederum zu dick, da dann natürlicherweise auch der $h_{50}$- und der $h_{90}$-Wert zu groß sind und die Kombination aus Glanz und Dunkelheit bzw. Schwärze bei den Eiseneffektpigmenten nicht mehr erhalten werden.

Bei den erfindungsgemäßen Eiseneffektpigmenten handelt es sich um sehr dünne Pigmente mit einer relativ engen Dickenverteilung. Derartige Pigmente besitzen eine hohe Deckkraft.

Als Deckkraft oder Deckvermögen von Pigmenten wird üblicherweise die Abdeckung einer Fläche pro Gewichtseinheit an Pigmentmenge bezeichnet. Je dünner die mittlere Dicke der Eisenpigmente und deren relative Breite der Dickenverteilung ist, desto größer ist die durch das Pigment abgedeckte Fläche und somit die dem Pigment eigene Deckkraft.

Die $d_{50}$-Werte der Längenverteilung der Pigmente (gemittelter Durchmesser der Pigmentplättchen) liegen bevorzugt in einem Bereich von 5 μm bis 40 μm, vorzugsweise von 6 μm bis 30 μm, weiter bevorzugt von 7 μm bis 25 μm und besonders bevorzugt von 7,5 μm bis 20 μm.

Weiterhin bevorzugt sind feine Pigmente im Größenbereich mit $d_{50}$-Werten von 8 bis unter 18 μm, weiter bevorzugt 9 bis 17 μm und besonders bevorzugt 10 bis 16 μm. Derartige Pigmente weisen bevorzugt non-leafing Eigenschaften auf, d.h. die Eiseneffektpigmente orientieren sich überwiegend nicht an oder in der Nähe der Oberfläche eines Anwendungsmediums, beispielsweise eines Farb- oder Lackfilms. Es kommt mithin nicht zu einem "Aufschwimmen" der Eiseneffektpigmente. Sie sind beispielsweise mit Ölsäure als Schmiermittel vermahlen und daher mit dieser Substanz beschichtet.

Bei dieser bevorzugten Ausführungsform weisen die erfindungsgemäßen Eiseneffektpigmente bei einer bevorzugten Größe von 8 bis unter 18 μm einen höheren Formfaktor auf, was zu einem stark verbesserten Kontrast führt, wenn die erfindungsgemäßen Eiseneffektpigmente im Anwendungsmedium durch ein angelegtes Magnetfeld orientiert werden.

Die Längenausdehnung wird dabei in üblicher Weise mittels Lasergranulometrie ermittelt (Gerät: Cilas 1064, Fa. Cilas, Frankreich) und als Kugeläquivalente ausgewertet.

Gemäß weiteren Ausführungsformen der Erfindung werden die erfindungsgemäßen Eiseneffektpigmente nachträglich mit einem passivierenden Inhibitor- und/oder einer passivierenden Korrosionsschutzschicht belegt bzw. beschichtet. Derartige Beschichtungen ermöglichen den sicheren Einsatz der erfindungsgemäßen Pigmente in Wasserlacken und/oder In Außenanwendungen, ohne dass die erfindungsgemäßen Eiseneffektpigmente durch Oxydation in ihren Glanz- und Farbeigenschaften beeinträchtigt werden.

Der Wirkungsmechanismus der Passivierungsschichten ist komplex. Bei Inhibitoren beruht er zumeist auf sterischen Effekten. Der größte Teil der Inhibitoren hat daher auch eine orientierende Wirkung im Sinne von "leafing" und "non-leafing", d.h. im Anwendungsmedium aufschwimmend bzw. nicht aufschwimmend, zur Folge.

Die Inhibitoren werden üblicherweise in niedrigen Konzentrationen in der Größenordnung von 1 Gew.-% bis 15 Gew.-%, bezogen auf das Gewicht des eingesetzten Eiseneffektpigmentes, zugegeben.

Für die Inhibierung werden vorzugsweise die folgenden Beschichtungssubstanzen verwendet:

- Organisch modifizierte Phosphonsäuren bzw. deren Ester der allgemeinen Formel $R\text{-}P(O)(OR_1)(OR_2)$, wobei: R = Alkyl, Aryl, Alkyl-aryl, Aryl-alkyl sowie Alkylether, insbesondere ethoxylierte Alkylether, und $R_1$, $R_2$ = H, $C_nH_{2n+1}$, mit n = 1 bis 12, vorzugsweise 1-6 ist, wobei Alkyl jeweils verzweigt oder unverzweigt sein kann. $R_1$ kann gleich oder unterschiedlich zu $R_2$ sein.

- Organisch modifizierte Phosphorsäuren und -ester der allgemeinen Formel $R\text{-}O\text{-}P(OR_1)(OR_2)$ mit R = Alkyl, Aryl, Alkyl-aryl, Aryl-alkyl sowie von Alkylether, insbesondere ethoxylierte Alkylether, und $R_1$, $R_2$ = H, $C_nH_{2n+1}$, mit n = 1 bis 12, vorzugsweise 1-6 ist, wobei Alkyl jeweils verzweigt oder unverzweigt sein kann. $R_1$ kann gleich oder verschieden von $R_2$ sein.

Verwendet werden können reine Phosphonsäuren oder -ester oder Phosphorsäuren oder -ester oder beliebige Mischungen derselben.

Im Falle einer Vermahlung bzw. Verformung der Eisenpartikel in einem überwiegend wässrigen Lösemittel werden vorstehend genannte Inhibitoren als Mahlhilfsmittel verwendet, um einer sicherheitstechnisch gefährlichen Wasserstoffentstehung während des Mahlvorganges vorzubeugen und ferner eine Oxydation der Eisenpartikel bzw. der entstehenden Eiseneffektpigmente zu vermeiden.

Weiterhin kann die passivierende Inhibitorschicht aus korrosionsinhibierenden organisch funktionalisierten Silanen, aliphatischen oder cyclischen Aminen, aliphatischen oder aromatischen Nitroverbindungen, Sauerstoff-, Schwefel und/oder Stickstoff enthaltenden Heterocyclen, wie beispielsweise Thioharnstoffderivaten, Schwefel und/oder Stickstoffverbindungen höherer Ketone, Aldehyden und/oder Alkoholen (Fettalkoholen) und/oder Thiolen, oder Gemischen derselben bestehen oder diese umfassen. Die passivierende Inhibitorschicht kann aber auch aus den vorgenannten Substanzen bestehen. Bevorzugt sind organische Phosphonsäuren und/oder Phosphorsäureester oder deren Gemische. Bei Verwendung von Aminverbindungen weisen diese bevorzugt organische Reste mit mehr als 6 C-Atomen auf. Bevorzugt werden vorgenannte Amine zusammen mit organischen Phosphonsäuren und/oder Phosphorsäureester oder deren Gemische eingesetzt.

Die Passivierung über Korrosionsschutzbarrieren mit chemischer und physikalischer Schutzwirkung ist auf vielfältige Weise möglich.

Passivierende Korrosionsschutzschichten, die den Eiseneffektpigmenten einen besonders guten Korrosionsschutz gewährleisten, umfassen oder bestehen aus Siliziumoxid, bevorzugt Siliziumdioxid, Chromeisenoxid, welches vorzugsweise durch Chromatierverfahren aufgebracht wird, Chromoxid, Zirkoniumoxid, Aluminiumoxid, polymerisiertem/n Kunststoffharz(en), Phosphat-, Phosphit- oder Boratverbindungen oder Mischungen derselben.

Bevorzugt sind Siliciumdioxidschichten und Chromeisenoxidschichten (Chromatierung).

Die $SiO_2$-Schichten werden bevorzugt durch Sol-Gel-Verfahren mit durchschnittlichen Schichtdicken von 5 - 150 nm und bevorzugt von 10 - 40 nm in organischen Lösemitteln hergestellt.

Im Folgenden wird das Verfahren zur Herstellung der erfindungsgemäßen Eisenpigmente dargestellt. Dieses zeichnet sich durch eine äußerst schonende Verformungsmahlung von sehr feinem Eisengrieß mit einer sehr engen Komgrößenverteilung aus.

Das Verfahren zur Herstellung von dünnen, plättchenförmigen Eisenpigmenten umfaßt das Vermahlen eines Eisengrießes mit einer Komgrößenverteilung mit einem $d_{Grieß,10} \leq 2,0$ $\mu$m, einem $d_{Grieß,50} \leq 5,0$ $\mu$m und einem $d_{Griebß,90} \leq 7,0$ $\mu$m unter Verwendung eines Mahlwerks in Gegenwart von Lösemittel und Schmierstoffen und kugelförmigen Mahlkörpern.

Die Größenverteilung des Eisengrießes weist einen $d_{Grieß,10} \leq 2,0$ $\mu$m, einen $d_{Grieß,50} \leq 5,0$ $\mu$m und einen $d_{Grieß,90} \leq 7,0$ $\mu$m auf. Bevorzugt umfasst die Größenverteilung einen $d_{Grieß,10} \leq 1,6$ $\mu$m, einen $d_{Grieß,50} \leq 3,3$ $\mu$m und einen $d_{Grieß,90} \leq 5,5$ $\mu$m.

Der Span der Größenverteilung des Eisengriesses, berechnet nach der Formel

$$\Delta d_{Grieß} = (d_{Grieß,90} - d_{Grieß,10}) / d_{Grieß,50}$$

beträgt bevorzugt 0,7 bis 1,6, besonders bevorzugt 0,8 bis 1,5 und ganz besonders bevorzugt 0,9 bis 1,4.

Nur mit derartig feinen und relativ eng geschnittenen Eisengrießen können die erfindungsgemäßen Eiseneffektpigmente hergestellt werden. Als Untergrenze weist die Größenverteilung folgende Kenndaten auf: $d_{Grieß,10} \geq 0,5$ $\mu$m, $d_{Grieß,50} \geq 0,8$ $\mu$m und $d_{Grieß,90} \geq 1,5$ $\mu$m. Besonders bevorzugte Untergrenzen des eingesetzten Eisengriesses sind: $d_{Grieß,10} \geq 0,7$ $\mu$m, $d_{Grieß,50} \geq 1,5$ $\mu$m und $d_{Grieß,90} \geq 2,5$ $\mu$m. Der verwendete Eisengrieß ist mithin überwiegend kein Eisengrieß in nanometrischen Dimensionen.

Die Verwendung eines derartig feinen Eisengrießes mit enger Größenverteilung Ist von essentieller Bedeutung für die Herstellung der erfindungsgemäßen Eiseneffektpigmente. Während der Verformungsmahlung werden die Eisengrießpartikel nicht völlig gleichmäßig verformt: dies bedeutet, dass einige Partikel stärker verformt werden, während ein Teil der Grießpartikel erst sehr spät während der Vermahlung verformt werden. Ein Grund hierfür ist auch die Tatsache, dass die Verformungswahrscheinlichkeit eines Partikels von seiner Größe abhängig ist. So besitzen bereits zu Plättchen vorverformte Partikel eine höhere spezifische Fläche als noch unverformter Grieß und demgemäß eine höhere Wahrscheinlichkeit, weiter verformt zu werden. Die Breite der Größenverteilung des Grießes geht somit nicht nur in die Größenverteilung der daraus geformte Eisenplättchen ein, sondern auch in die Verteilung der Dickenverteilung. Für schmale Dickenverteilungen muss daher ein Eisengrieß mit entsprechend geringer Größenvarianz verwendet werden.

Die Eisenpartikel eines handelsüblichen Eisenpulvers werden mit herkömmlichen Mahlhilfsmitteln, beispielsweise mit einem Lösungsmittel wie Testbenzin und mit einem Schmiermittel wie Ölsäure, mittels kugelförmiger Mahlkörper, durch eine äußerst schonende Verformungsmahlung zu dünnen Eisenplättchen vermahlen. Unter Verformungsmahlung ist hier eine schonende Mahlung, bei der der Grieß weitgehend nur verformt wird, zu verstehen. Der Grieß bzw. die entstehenden Plättchen werden mithin nur immer weiter verformt und weitgehend nicht zerkleinert. Die Mahlkörper sind vorzugsweise Mahlkugeln und bestehen bevorzugt aus Stahl, Glas oder Keramik. Besonders bevorzugt bestehen die Mahlkugeln aus Stahl.

Die Mahlkugeln weisen bevorzugt eine mittlere Größe von 0,5 bis 1,5 mm und besonders bevorzugt von 0,6 bis zu 1,0 mm auf.

Bevorzugt wird hierbei als Eisengrieß Carbonyleisenpulver und besonders bevorzugt reduzierend behandeltes Carbonyleisenpulver verwendet. Die Herstellung und Zusammensetzung dieses Grießes ist in der DE 101 14 446 A1 ausführlich beschrieben, deren Inhalt hiermit unter Bezugnahme aufgenommen wird.

Weiterhin kann Eisengrieß, der durch elektrolytische Methoden oder durch Naßfällungsmethoden hergestellt wird oder durch eine Kombination dieser Methoden, verwendet werden. Im Prinzip sind Eisengriesse, die beispielsweise nach den Methoden, die in Hollemann, Wiberg "Lehrbuch der Anorganischen Chemie", Walter de Gruyter & Co Verlag Berlin, 91- 100. Auflage (1985) S. 1.127 Kap. 1.1.2 dargestellt sind, verwendbar.

Ein wesentlicher Unterschied zu dem Verfahren gemäß der Lehre der DE 101 14 446 A1 liegt darin, dass Eisencarbonylpulver eine enge Größenverteilung aufweisen muß, wie vorstehend ausgeführt Somit ist zu verwendendes Carbonyleisenpulver oder jeder andere Eisengrieß ggf. zunächst zu klassieren, um vorgenannte Größenverteilung einzustellen. Das Klassieren des Eisengrieß oder von Carbonaleisenpulver kann beispielsweise durch Siebung oder unter Verwendung eines Zyklons erfolgen.

Die Vermahlung der Grießpartikel aus Eisen zu Flakes (Eisenplättchen bzw. Eiseneffektpigmente) kann trocken oder nass, d. h. in Gegenwart von Lösemitteln wie Testbenzin, Mineralöl, Toluol, Alkoholen, Chlorwasserstoffen, Wasser oder deren Gemischen, erfolgen.

Bevorzugt werden die Grießpartikel aus Eisen nass vermahlen, da die Nassvermahlung bzw- Verformung schonender ist als die Trockenvermahlung bzw. - verformung und bei der Nassvermahlung das eingesetzte Schmiermittel und ggf. die Inhibitorsubstanzen oder Korrosionsschutzmittel auf dem gesamten Mahlgut gleichmäßig verteilt werden. Auch aus sicherheitstechnischen Überlegungen ist die Naßvermahlung bzw. -verformung zu bevorzugen. Fein verteiltes Eisenpulver hat pyrophore Eigenschaften und ist daher besser in einer nicht-pulverförmigen Art handzuhaben.

Bei der Naßvermahlung bzw. -verformung kann das Mahlgut nach jeder Mahlstufe einfacher klassiert werden.

Die Vermahlung von handeisüblichem Eisenpulver erfolgt in herkömmlichen Mühlen, beispielsweise in Rührwerkskugelmühlen, Kollermühlen und Trommelkugelmühlen, besonders vorteilhaft in Drehrohrkugelmühlen.

Bei der Vermahlung wird Eisenpulver mit bestimmter Teilhengröße zusammen mit Lösemittel, z. B. Testbenzin, in eine Kugelmühle eingetragen. Zur Vermeidung des Kaltverschweißens der Pulverpartikel wird Schmiermittel, beispielsweise Ölsäure, Stearinsäure oder auch Inhibitoren, in einer Menge zugesetzt, welche von der jeweiligen freien spezifischen Oberfläche (BET) der ausgewalzten Eisenpigmente abhängig ist. In der Regel werden 2 bis 25 Gew.-% Ölsäure und/oder Stearinsäure und bevorzugt 2,5 bis 22 Gew.-%, bezogen auf das Gewicht des Eisenpulvers, eingesetzt.

Beim Einsatz von Carbonyleisenpulver erfolgt dessen Reduktion durch Tempern, in üblicher, beispielsweise in DE 101 14 446 A1 ausführlich beschriebener Weise, deren Inhalt hiermit unter Bezugnahme aufgenommen wird

Es kann jedoch auch ein Eisengrieß, der in "Atomizem" (Zerstäubern) durch Verdüsung von flüssigem Eisen hergestellt wird, verwendet werden. Der Grieß hat bevorzugt eine weitgehend runde Form. Besonders bevorzugt werden Eisengrieße mit einer kugelförmigen bis leicht ellipsoiden Form.

Der erfindungsgemäß zu verwendende Eisengrieß ist ein sehr feiner Metallgrieß mit einer sehr engen Größenverteilung. Das Komband der Größenverteilung wird in üblicher Weise durch Lasergranulometrie ermittelt.

Der Grieß kann nach dem Verdüsungsschritt durch entsprechende Klassierungsschritte auf die gewünschte schmale Größenverteilung gebracht werden. Die Klassierung kann mit Windsichtem, Zyklonen, Sieben und/oder anderen bekannten Einrichtungen durchgeführt werden.

Um geringe Oxidgehalte im Eisengrieß zu realisieren wird der Verdüsungsschritt bevorzugt unter Inertgasatmosphäre durchgeführt. Als Inertgase werden vorzugsweise Stickstoff und/oder Helium eingesetzt.

Die Reinheit des bei der Verdüsung verwendeten Eisens beträgt vorzugsweise 97,0 bis über 99,9 Gew.-%, und besonders bevorzugt 98,0 bis 99,9 Gew.-%, bezogen auf das Gesamtgewicht des Eisengriesses. Der Grieß kann in entsprechend geringen Mengen die üblichen Legierungsbestandteile (z.B. Mg, Si, Cr, Mn etc.) enthalten. Der Eisengrieß wird unter Verwendung eines Mahlwerks, vorzugsweise einer Kugelmühle oder einer Rührwerkskugelmühle, in Gegenwart von Lösemittel und Schmierstoffen als Mahlhilfsmittel und von kugelförmigen Mahlkörpem, vorzugsweise Mahlkugeln, durchgeführt.

Die Vermahlung kann in einem Arbeitsgang durchgeführt werden oder auch in zwei oder mehreren Arbeitsgängen. So können beispielsweise bei zwei Vormahlungsstufen jeweils Mahlkugeln unterschiedlicher Größe eingesetzt werden.

Aufgrund der schonenden Mahlweise dauert die Mahlung vergleichsweise lang. Die Mahldauer beträgt bevorzugt über 12 bis 100 h, besonders bevorzugt 15 bis 80 h und ganz besonders bevorzugt 18 bis 45 h. Wird die Vermahlung in zwei oder mehr Stufen durchgeführt, so verstehen sich diese Vermahlungszeiten als die Gesamtzeit der Vermahlungsdauer.

Bei Vermahlungsdauem von 12 h und weniger können die Pigmente nicht genügend weit verformt werden, um die erfindungsgemäßen kleinen Dicken zu erhalten. Will man mit kürzerer Mahldauer die erfindungsgemäßen Eiseneffektpigmente erhalten, so muß man die Partikel stärker verformen, beispielsweise durch höhere Umdrehungsgeschwindigkeiten. Dann jedoch gerät man mehr und mehr in die Zerkleinerungsmahlung und erhält Eisenpigmente minderer Qualität. Vermahlungszeiten über 100 h sind hingegen unwirtschaftlich.

Die laugen Mahlzeiten führen zu einer Vielzahl von Grieß/Pigment-Kugel-Stößen. Dadurch wird das Pigment sehr gleichmäßig ausgeformt, wodurch eine sehr glatte Oberfläche und eine sehr enge Dickenverteilung ausgebildet werden.

Bevorzugt sind Kugeln mit sehr glatter Oberfläche, möglichst runder Form und einheitlicher Größe. Die Temperaturen während des Mahlvorganges liegen üblicherweise im Bereich von 10°C bis 70 °C. Bevorzugt sind Temperaturen in einem Bereich von 25°C bis 50°C.

Die Mahlung bzw. Verformung wird vorzugsweise in einem Lösemittel, vorzugsweise bei einem Gewichtsverhältnis von Lösemittel zu Eisenpartikel von 0,8 bis 6 und besonders bevorzugt von 1,0 bis 4,0, durchgeführt.

Das Gewichtsvefiältnis der Mahlkugeln zu Eisenpartikeln beträgt vorzugsweise 20 bis 120 besonders bevorzugt von 25 bis 100.

Bezogen auf die Vermahlung in einer Kugelmühle ist die kritische Drehzahl $n_{krit}$ ein wichtiger Parameter, der angibt, ab wann die Kugeln durch die Zentrifugalkräfte an die Mühlenwand gepresst werden und praktisch keine Mahlung mehr stattfindet:

$$n_{krit.} = \sqrt{\frac{g}{2\pi^2} \cdot \frac{1}{D}}$$

wobei D der Trommeldurchmesser und g die Gravitationskonstante ist.

Die Umdrehungsgeschwindigkeiten der Kugelmühle betragen vorzugsweise 20 % bis 70 %, weiter vorzugsweise 25 % bis 65 % der kritischen Drehzahl $n_{krit}$.

Niedrige Umdrehungsgeschwindigkeiten begünsfigen eine langsame Verformung der Eisenpartikel. Um eine langsame Verformung zu bewirken, werden bei dem erfindungsgemäßen Verfahren bevorzugt auch leichte Mahlkugeln verwendet Bevorzugt werden Mahlkugeln mit einem Einzelgewicht von 0,2 bis 10 mg, besonders bevorzugt von 0,21 bis 5 mg und ganz besonders bevorzugt von 0,22 bis 4,3 mg verwendet.

Im Unterschied zu herkömmlichen Mahlverfahren wird der Eisengrieß bei dem erfindungsgemäßen Verfahren zum überwiegenden Anteil nicht vermahlen bzw. zerkleinert, sondern äußerst schonend über einen längeren Zeitraum verformt.

Die oben angeführten Bedingungen führen zu einer sehr schonenden Mahlung bzw. Verformung, bei der der Eisengrieß langsam ausgeformt wird und Brüche infolge eines Kugelstoßes mit hoher kinetischer Energie vermieden werden.

Als Schmierstoffe können während der Vermahlung eine Vielzahl von Verbindungen verwendet werden.

Hierbei sind vor allem die seit langer Zeit verwendeten Fettsäuren mit Alkylresten von 10 bis 24 C-Atomen zu nennen. Vorzugsweise werden Stearinsäure, Ölsäure oder Mischungen derselben verwendet. Dabei führt Stearinsäure als Schmiermittel zu leafing-Pigmenten, Ölsäure hingegen zu non-leafing-Pigmenten. Leafing-Pigmente sind **dadurch gekennzeichnet, dass** sie in einem Anwendungsmedium, beispielsweise einem Lack oder eine Druckfarbe, aufschwimmen, d.h. sich an der Oberfläche des Anwendungsmediums anordnen. Non-leafing-Pigmente ordnen sich hingegen im Anwendungsmedium an. Den Fettsäuren können zusätzlich beispielsweise langkettige Aminoverbindungen zugesetzt werden. Die Fettsäuren können tierischen oder auch pflanzlichen Ursprungs sein. Ebenfalls können organische Phosphonsäuren und/oder Phosphorsäureester als Schmiermittel verwendet werden.

Das Schmiermittel sollte in nicht zu geringer Menge eingesetzt werden, da anderenfalls infolge der starken Ausformung des Eisengriesses die sehr großen Oberflächen der hergestellten plättchenartigen Eisenpigmente nur ungenügend durch adsorbiertes Schmiermittel abgesättigt werden. In diesem Fall kommt es zu Kaitverschweißungen. Bevorzugte Mengen sind daher 1,5 bis 30 Gew.-%, bevorzugt 2 bis 25 Gew.%, Schmiermittel bezogen auf das Gewicht des eingesetzten Eisengrieß.

Die Wahl des Lösemittels ist an sich unkritisch. Man kann übliche Lösemittel wie Testbenzin, Solvent Naphtha etc. einsetzen. Auch die Verwendung von Alkoholen, wie z.B. Isopropanol, Ether, Ketone, Ester usw., ist möglich.

Ebenfalls kann Wasser (im zumindest überwiegenden Teil) als Lösemittel verwendet werden. In diesem Fall sollten die eingesetzten Schmiermittel allerdings deutlich korrosionsinhibierende Wirkung haben. Bevorzugt sind hier Phosphonsäuren und/oder Phosphorsäureester, die auch ethoxylierte Seitenketten tragen können. Auch die Zugabe von weiteren Korrosionsinhibitoren während der Mahlung ist hier vorteilhaft.

Nach der Vermahlung bzw. Verformung der Eisenpartikel werden die erhaltenen Eiseneffektpigmente von den Mahlkörpern, vorzugsweise den Mahlkugeln, abgetrennt.

Bei einem weiteren, bevorzugten Verfahrensschritt können die erhaltenen Eiseneffektpigmente einer Größenklassifikation unterzogen werden. Diese Klassitkation sollte schonend durchgeführt werden, um die erfindungsgemäßen dünnen Eiseneffektpigmente nicht zu zerstören. Es kann sich dabei beispielsweise um eine Nasssiebung, eine Dekantierung oder auch um eine Trennung durch Sedimentation (infolge der Schwerkraft oder durch Zentrifugieren) handeln. Bei der Nasssiebung wird i. d. R. der Grobanteil herausgesiebt. Bei den anderen Verfahren kann insbesondere der Feinanteil abgetrennt werden. Anschließend wird die Suspension von überschüssigem Lösemittel getrennt (z.B. mit Hilfe einer Filterpresse, Zentrifuge oder Filter).

In einem weiteren Schritt kann dann eine Weiterverarbeitung zur gewünschten Angebotsform erfolgen.

So können die erfindungsgemäßen Eiseneffektpigmente in eine Pastenform überführt werden. Der Festkörpergehalt beträgt hierbei 30 bis 65 Gew.%, bevorzugt 40 bis 60 Gew.-% und besonders bevorzugt 45 bis 55 Gew.-%, bezogen auf das Gesamtgewicht der Paste.

Weiterhin können die erfindungsgemäßen Eiseneffektpigmente durch Austrocknen in eine Pulverform, vorzugsweise in eine nichtstaubende Pulverform, überführt werden. Das getrocknete Pulver kann durch Zugabe sehr kleiner Mengen Lösemittel (< 10%) in einem geeigneten Homogenisator zu einem nicht staubenden Metallpulver weiterverarbeitet werden. Auch kann der Filterkuchen zunächst ausgetrocknet und anschließend mit einem anderen Lösemittel wieder angepastet werden (Umnetzen).

Überraschenderweise können die erfindungsgemäßen Eiseneffektpigmente aber auch durch Versetzen des Filterkuchens mit einer geeigneten Dispersion eines geeigneten Harzes zu einem Granulat, Pellets, Briketts, Tabletten oder Würstchen überführt werden. Diese Angebotsformen besitzen die Vorteile, dass sie nicht stauben, eine leichte Dosierbarkeit aufweisen und hervorragend dispergierbar sind.

Es hat sich überraschend gezeigt, dass die erfindungsgemäßen Eiseneffektpigmente ungeachtet der geringen Dicke kompaktiert werden können, ohne dass es zu einer Beeinträchtigung der optischen Eigenschaften der Eiseneffektpigmente kommt, wenn diese zu einem späteren Zeitpunkt in ein Farb- oder Lackmedium eingebracht werden.

Die Pelletierung kann auf einem Pelletierteller auf herkömmliche Art und Weise durchgeführt werden. Das Tablettieren kann in einer Tablettiervorrichtung erfolgen. Die Würstchen können durch ein Pressverfahren aus Eiseneffektpigmentpaste oder - pulver hergestellt werden oder indem eine Eiseneffektpigmentpaste durch einen Extruder extrudiert wird und die extrudierten Pastenstränge durch eine umlaufende Messeranordnung zerteilt werden. Ein Granulieren der erfindungsgemäßen Eiseneffektpigmente kann beispielsweise durch Sprühgranulieren erfolgen.

Die erfindungsgemäßen Eiseneffektpigmente können äußerst vorteilhaft in Granulaten oder Pellets mit hohen Pigmentgehalten, beispielsweise von 90 Gew.-% bis 35 Gew.-%, vorzugsweise von 70 Gew.-% bis 40 Gew.-%, bezogen auf das Gesamtgewicht des Granulats bzw. Pellets, bereitgestellt werden.

Aufgrund der hohen spezifischen Oberfläche der erfindungsgemäßen Eiseneffektpigmente müssen beispielsweise zur Pelletierung der erfindungsgemäßen Eiseneffektpigmente relativ große Mengen an Dispergierharz verwendet werden. Vorzugsweise werden 2-50 Gew.-%, weiter bevorzugt 5 bis 30 Gew.-%, Harz, bezogen auf das Gesamtgewicht der Gesamtformullerung der Pellets, verwendet.

Zur Pelletierung kann eine Vielzahl von Dispergierharzen verwendet werden. Beispiele hierfür sind sowohl natürlich vorkommende wie auch synthetische Harze. Sie umfassen beispielsweise Alkydharze, Carboxymethyl- und Carboxyethylcelluloseharze, Cellulose Acetat, Cellulose Acetat Propionat (CAP) und Cellulose Acetat Butyrat (CAB), Cumarol-lndenharze, Epoxidester, Epoxid-Melamin und Epoxid-Phenol-Kondensate, Ethyl- und Methylcellulose, Ethylhydroxyethylcellulose, Hydroxyethytcellulose, Hydroxypropylmethylcellulose, Keton- und Maleinsäureharze, Kolophoniumharze, Melaminharze, Nitrocelluloseharze, Phenol- und modifizierte Phenolharze, Polyacrylamid-, Polycarbonat-, Polyamid-, Polyester-, Polyether-, Polyurethan-, und Vinylharze.

Unter diesen polymeren Harzen sind insbesondere die folgenden bevorzugt:

acrylatische Copolymere und Acrylesterharze, Polyacrylonitril- und Acrylonitrilcopolymemarze, Copolymere aus Butadien und Vinylidenchloride, Butadien/Styrol Copolymere. Methylacrylat- und Methymethacrylatcopolymere; sowie Polybuten-, Polyisobutylen-, Polyvinylacetat-, Polyvinylakohol-, Polyvinylchlorid-, Polyvinylether-, Polyvinylpyrrolidon- und Polystyrolharze. Weitere Copolymere beinhalten Styrol/Maleinsäureanhydrid-und Styrol/Schellackharze, Vinyl-chlorid/Vinylacetat-, Vinylchlorid/Vinylether- und Vinylchlorid/Vinylidenchloridharze.

Ferner können auch natürlich vorkommende Harze wie Gummi Arabicum, Guttapercha, Casein und Gelatine verwendet werden.

Bevorzugt sind Aldehydharze, wie die Laropalserie der BASF AG, Ludwigshafen, Deutschland. Weiterhin kommen Wachse als Bindermaterialien in Frage. Hier sind als Beispiele natürliche Wachse wie Bienenwachs, Candelilla-, Camauba-, Montan- sowie Paraffinwachse zu nennen. Ebenso kommen synthetische Wachse wie beispielsweise PE-Wachse in Betracht

Die vorgenannten Präparationen lassen sich beispielsweise in Lacksysteme oder Druckfarben sehr gut einarbeiten, ohne dass es zu unerwünschten Agglomerationen von erfindungsgemäßen Eiseneffektpigmenten kommt.

Die durch nachträgliche Beschichtungen passivierten erfindungsgemäßen Eiseneffektpigmente finden bevorzugt in Wasserlacken und Außenanwendungen Verwendung.

Die erfindungsgemäßen, plättchenförmlgen Eiseneffektpigmente mit einzigartiger Optik und ausgeprägtern Farbflop von dunkel-metallic zu schwarz-metallic und mit bisher nicht bekanntem Abkippeffekt ermöglichen Formulierungen in dunklen Farbtönen mit einer ausgeprägten metallischen Optik.

Diese neuartigen Eiseneffektpigmente eröffnen neue Möglichkeiten zur innovativen. Effektlackierung bzw. ergänzen mit ihren anwendungstechnischen Eigenschaften die konventionell gehandelten Eiseneffektpigmente in wirtschaftlich effektiver Weise.

Das ausgezeichnete Benetzungsverhalten und die daraus resultierende hervorragende Pigmentorientierung der erfindungsgemäßen Elseneffektpigmente erzeugen homogene, gut deckende und brillante Metalloberflächen.

Die erfindungsgemäßen Eiseneffektpigmente lassen sich vorteilhaft im Anwendungsmedium mit konventionellen Farbpigmenten oder Farbstoffen mischen.

Die konventionellen Farbpigmente haben üblicherweise mittlere Teilchengrößen von 0,05bis 5 $\mu$m und umfassen sowohl anorganische wie auch organische Pigmente.

Als anorganische Farbpigmente können Bunt-, Schwarz- und Weißpigmente eingesetzt werden. Typische organische Pigmente sind Bunt- und Schwarzpigmente.

Geeignete organische Pigmente sind z.B.:

| | |
|---|---|
| - Monoazoplgmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 23, 3 1, 48:1 , 48:2, 48:3, 48:4, 49, 49:1 , 5 1:1 , 52:1 , 52:2, 53, 53:1. 53:3, 57:1 , 58:2, 58:4, 63, 112, 146, 148, 170, 175, 184, 185, 187, 191:1, 208, 210, 245, 247 und 251; |
| | C.I. Pigment Yellow 1, 3, 62, 65, 73, 74, 97, 120, 151 , 154, 168, 181 , 183 und 191; |
| | C.I. Pigment Violet 32; |
| - Disazopigmente: | C.I. Pigment Orange 16, 34, 44 und 72; |
| | C.I. Pigment Yellow 12, 13, 14, 16, 17, 81, 83, 106, 113, 126, 127, 155, 174, 176, 180 und 188; |
| - Disazokondensationspigmente: | C.I. Pigment Yellow 93, 95 und 12B; |
| | C.I. Pigment Red 144, 166, 214, 220, 221, 242 und 262; |
| | C.I. Pigment Brown 23 und 41; |
| - Anthanthronpigmente: | C.I. Pigment Red 168; |
| - Anthrachinonpigmente: | C.I. Pigment Yellow 147,177 und 199; |
| | C.I. Pigment Violet 31; |
| - Anthrapyrimidinpigmente: | C.I. Pigment Yellow 108; |
| - Chinacridonpigmente: | C.I. Pigment Orange 48 und 49; |
| | C.I. Pigment Red 122, 202, 206 und 209; |
| | C.I. Pigment Violet 19; |
| - Chinophthalonpigmente: | C.I. Pigment Yellow 138; |
| - Diketopyrrolopyrrolpigmente: | C.I. Pigment Orange 71, 73 und 81; |
| | C.I. Pigment Red 254, 255, 264, 270 und 272; |
| - Dioxazinpigmente: | C.I. Pigment Violet 23 und 37; C Pigment Blue 80; |
| - Flavanthronpigmente: | C.I. Pigment Yellow 24; |
| - Indanthronpigmente: | C.I Pigment Blue 60 und 64; |
| - Isoindolinpigmente: | C.I. Pigment Orange 6 1 und 69; |
| | C.I. Pigment Red 260; C. Pigment Yellow 139 und 185; |
| - Isoindolinonpigmente: | C.I. Pigment Yellow 109, 110 und 173; |
| - Isoviolanthronpigmente: | C.I. Pigment Violet 31; |
| - Metallkomplexpigmente: | C.I. Pigment Red 257; C. Pigment Yellow 117, 129, 150,153 und 177; |
| | C.I. Pigment Green 8; |
| - Perinonpimente: | C.I. Pigment Orange 43; |
| | C.I. Pigment Red 194; |
| - Perylenpigmente: | C.I. Pigment Black 31 and 32; |
| | C.I. Pigment Red 123, 149, 178, 179, 190 und 224; |
| | C.I. Pigment Violet 29; |
| - Phthalocyaninpigmente: | C.I. Pigment Blue 15, 15:1 , 15:2, 15:3, 15:4, 15:6 und 16; |
| | C.I. Pigment Green 7 und 36; |
| - Pyranthronpigmente: | C.I. Pigment Orange 51; |
| | C.I. Pigment Red 216; |
| - Pyrazolochinazolonpigmente: | C.I. Pigment Orange 67; |

(fortgesetzt)

|  |  |
|---|---|
|  | C.I. Pigment Red 251; |
| - Thioindigopigmente: | C.I. Pigment Red 88 und 181; |
|  | C.I. Pigment Violet 38; |
| - Triarylcarboniumpigmente: | C.I. Pigment Blue 1, 6 1 und 62; C. |
|  | C.I.Pigment Green 1; , |
|  | C.I. Pigment Red 81,81:1 und 169; |
|  | C.I. Pigment Violet 1, 2, 3 und 27; |
| - C.I. Pigment Black 1 (Anilinschwarz); |  |
| - C.I. Pigment Yellow 101 (Aldazingelb); |  |
| - C.I. Pigment Brown 22. |  |

Beispiele für geeignete anorganische Pigmente sind:

| - Weißpigmente: | Titandioxid (C.I. Pigment White 6), Zinkweiß, Farbenzinkoxid; Zinksulfid, Lithopone; |
|---|---|
| - Schwarzpigmente: | Eisenoxidschwarz (C.I. Pigment Black 11), Eisen-Mangan-Schwarz, Spinellschwarz (C.I. Pigment Black 27); Ruß (C.I.Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultrarmarinblau; Manganblau; Ultramarinviolett; Kobalt- und Manganviolett; Eisenoxidrot (C.I. Pigment Red 101); Cadmiumsulfoselenid (C.I. Pigment Red 108); Cersulfid (C.I. Pigment Red 265); Molybdat- rot (C.I. Pigment Red 104); Ultramarinrot; Eisenoxidbraun (C.I. Pigment Brown 6 und 7), Mischbraun. Spinell- und Korundphasen (C.I. Pigment Brown 29, 3 1, 33, 34, 35, 37, 39 und 40). Chromtitangelb (C.I.. Pigment Brown 24), Chromorange; Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161 , 162, 163, 164 und 189); Chromtitangelb; Spinellphasen (C.I, Pigment Yellow 119); Cadmiumsulfid und Cadmiumzink- sulfid (C.I. Pigment Yellow 37 und 35); Chromgelb (C.I.. Pigment Yellow 34); Bismutvanadat (C.I. Pigment Yellow 184). |

Die efindungsgemäßen Eseneffektpigmente mit der neuen Coloristik von dunklem, jedoch hochglänzendem Eisen sind in Coatings (Beschichtungen), Anstrichen, Lacken, Druckfarben, Pulvertacken, Kunststoffen und kosmetischen Formulierungen sowie als magnetische bzw. magnetisierbare Metalleffektpigmente im Wertschriften-und Sicherherheitsdurckbereich (Security-Druck) sowie als Reflektormaterial in mehrschichtigen Effektpigmenten vorteilhaft einsetzbar.

Die erfindungsgemäßen Eiseneffektpigmente lassen sich aufgrund ihrer magnetischen Eigenschaften durch Verwendung von Permanent- oder Elektromagneten im Anwendungsmedium entlang der magnetischen Feldlinien zu einzigartigen Effekten mit faszinierender Tiefenwirkung und Dreidimensionalität anordnen. Es können hologrammartige und kinematogrammartige Strukturen erzeugt werden. Derartige Strukturen sind insbesondere für Sicherheitsdruckanwendungen, aber auch für Coatings wie beispielweise Automobilinnenlackierungen gefragt.

Im Vollton oder auch in Abmischung mit Farbpigmenten lassen sich so einzigartige Effekte erzielen.

Dabei weisen die enfindungsgemäßen Eiseneffektpigmente gegenüber den im Stand der Technik bekannten magnetischen Pigmenten eine noch bessere Orientierbarkeit im Magnetfeld auf. Dies führt aufgrund ihrer gleichmäßigeren Dickenverteilung zu einem noch stärkeren Kontrast der im Magnetfeld unterschiedlich orientierten Pigmente.

Die erfindungsgemäßen Eiseneffektpigmente finden Verwendung als Effektpigment in Coatings, Anstrichen. Lacken. Druckfarben, Pulvertacken, Kunststoffen, Wertschriften- und Sicherheitsdrucken, Kosmetik und Reflektormaterial bei der Herstellung mehrschichtiger Effektpigmente.

Weiterhin finden die erfindungsgemäßen Eiseneffektpigmente Verwendung als magnetisch orientierbares Effektpigment in Coatings, Anstrichen, Lacken, Druckfarben. Pulverlacken. Kunststoffen. Wertschriften- und Sicherhenitsdrucken oder kosmetischen Anwendungen.

In kosmetischen Formulierungen sind hierbei insbesondere Nagellacke bevorzugt. Hierbei sind insbesondere

**EP 2 157 138 B1**

Nagellacke, die in der US 2006/0088484 A1, die hiermit unter Bezugnahme aufgenommen wird, zu erwähnen.

Besonders vorteilhaft sind die erfindungsgemäßen Eiseneffektpigmente in konventionellen Lackierungen, beispielsweise im Bereich der Consumer-Elektronic, der Automobil-Innengestaltung oder für Möbeldesign, einsetzbar. Vorteilhaft können sie auch in funktionellen Anstrichmitteln, beispielsweise zur Reflexion von Wärmestrahlung, verwendet werden.

Weiterhin zeichnen sich die erfindungsgemäßen Eiseneffektpigmente durch eine sehr gute Chemikalien-, Licht- und Wetterbeständigkeit aus. Zudem können sie ungeachtet der geringen Pigmentdicken überraschenderweise wie konventionelle Metalleffektpigmente gehandhabt und verarbeitet werden.

Weiterhin betrifft die Erfindung einen beschichteten Gegenstand, der die erfindungsgemäßen Eiserieffektpigmente enthält oder aufweist.

In weiter bevorzugten Aurführungsformen werden die erfindungsgemäßen Eiseneffektpigmente in Druckfarben verwendet. Dabei kann es sich um eine Flüssig-Druckfarbe wie Tief-, Flexo-, Sieb- oder Intagliodruckfarbe handeln.

Ein weiterer Gegenstand der Erfindung ist eine die erfindungsgemäßen Eiseneffektpigmente enthaltende Druckfarbe, im speziellen eine Flüssig-Druckfarbe wie Tief-, Flexo- oder Siebdruckfarbe.

Derartige Tief-, Flexo- oder Siebdruckfarben enthalten Lösemittel bzw. Lösemittelgemische. Diese dienen u.a. zum Lösen der Bindemittel, aber auch zur Einstellung wichtiger Anwendungseigenschaften der Druckfarben, wie beispielsweise der Viskosität oder der Trocknungsgeschwindigkeit.

Für Flüssig-Druckfarben wie Flexo- und Tiefdruckfarben eingesetzte Lösemittel umfassen insbesondere niedrig siedende Lösemittel. Der Siedepunkt beträgt im Regelfalle nicht mehr als 140°C. Höher siedende Lösemittel werden nur in kleineren Mengen zur Einstellung der Trocknungsgeschwindigkeit eingesetzt. Siebdruckfarben sind ähnlich formuliert wie Flexo- oder Tiefdruckfarben, sie sind lediglich etwas höher viskos eingestellt und weisen üblicherweise Lösemittel mit etwas höheren Siedepunkten auf.

Beispiele geeigneter Lösemittel für Flüssigdruckfarben umfassen Ethanol, 1 - Propanol oder 2-Propanol, substituierte Alkohole wie beispielsweise Ethoxypropanol oder Ester wie beispielsweise Ethylacetat, Isopropylacetat, n-Propyl- oder n-Butylacetat. Es können selbstverständlich auch Gemische verschiedener Lösemittel eingesetzt werden. Beispielsweise kann es sich um ein Gemisch aus Ethanol und Estern wie Ethylacetat oder Propylacetat handeln. Für das Drucken mit Flexodruckplatten ist es regelmäßig empfehlenswert, dass der Anteil der Ester am Gesamtlösemittel ca. 20 - 25 Gew.-% nicht überschreitet Als Lösemittel für Flüssigdnrckfarben sind bevorzugt auch Wasser oder überwiegend wässrige Lösemittelgemische einsetzbar.

Je nach Art der Druckfarbe werden üblicherweise 10 bis 60 Gew.-% Lösemittel bezüglich der Summe aller Bestandteile eingesetzt. Im Fall der erfindungsgemäßen Druckfarben erweist sich jedoch ein Bereich von 60 - 80 Gew.-% Lösemittel als besonders vorteilhaft.

Strahlungshärtbare Druckfarben enthalten im allgemeinen nicht die oben genannten Lösemittel, sondern Reaktivverdünner. Reaktivverdünner erfüllen typischerweise eine Doppelfunktion. Einerseits dienen sie zum Vernetzen bzw. Härten der Druckfarbe, andererseits dienen sie aber auch wie konventionelle Lösemittel (DE 20 2004 005 921 UI 2004.07.1 zum Einstellen der Viskosität. Beispiele umfassen Beispiele umfassen Butylacrylat, (2-Ethylhexyl)acrylat, sowie insbesondere mehrfunktionelle Acrylate wie 1 ,4-Butandioldi(meth)acrylat, 1 ,6-Hexandioldi(meth)acrylat oder Trimethylolpropantri(meth)acrylat.

Als Bindemittel für die erfindungsgemäßen Metallic-Druckfarben können prinzipiell die für Flüssig-Druckfarben üblichen Bindemittel eingesetzt werden. Je nach dem gewünschten Anwendungszweck und den gewünschten Eigenschaften trifft der Fachmann eine geeignete Auswahl. Beispiele geeigneter Bindemittel umfassen Polyester, Polyamide, PVC-Copolymerisate, aliphatische und aromatische Ketonharze, Melamin-Harnstoff-Harze, Melamin-Formaldehyd-Harze, Maleinate, Kolophoniumderivate, Oase- in bzw. Caseln-Derivate, Ethylcellulose, Nitrocellulose oder aromatische bzw. aliphatische Polyurethane. Es können auch Polymere oder Copolymere von Vinylacetat, Vinylalkohol, Acylaten, Methacrylaten, Vinylpyrrolidon oder Vinylacetalen eingesetzt werden. Von besonderem Vorteil können funktionelle Gruppen aufweisende hyperverzweigte Polymere, beispielsweise hyperverzweigte Polyurethane, Polyharnstoffe oder Polyesteramide eingesetzt werden, wie von WO 02/36695 und WO 02/36697 offenbart. Es können selbstverständlich auch Gemische verschiedener polymerer Bindemittel eingesetzt werden, vorausgesetzt, die ausgewählten Bindemittel weisen in Kombination miteinander keine unerwünschten Eigenschaften auf. Die Menge aller Bindemittel beträgt üblicherweise 5 - 40 Gew.-% bzgl. der Summe aller Bestandteile der Druckfarbe.

Besonders bevorzugte Bindemittel umfassen beispielsweise Nitrocellulose, Ethylcellulose, Hydroxyethyloellulose, Acrylate, Polyvinylbutyrale sowie aliphatische und aromatische Polyurethane und Polyharnstoffe, insbesondere hyperverzweigte Polyurethane und Polyharnstoffe sowie Mischungen davon.

Als Bindemittel für wasserverdünnbare Metallic-Druckfarben kommen insbesondere Copolymere auf Basis von (Meth)acrylsäure und/oder deren Estern mit Styrol in Frage. Derartige Bindemittel sind als Lösungen oder Dispersionen für den Einsatz in Druckfarben beispielsweise unter dem Namen Zinpol® (Fa. Worlee) kommerziell erhältlich. Weitere Beispiele umfassen aromatische bzw. aliphatische wässrige Polyurethane, Polyester und auf wässrige Polyamide.

Für pastöse Druckfarben bevorzugte Bindemittel umfassen beispielsweise Kolophoniumharze oder modifizierte Kolophohoniumharze. Beispiele für modifizierte Kolophoniumharze umfassen mit Polyolen wie beispielsweise Glycerin oder Pentaerythrit ganz oder teilweise veresterte Kolophoniumharze.

Strahlungshärtbare Druckfarben umfassen Bindemittel, die vernetzbare Gruppen umfassen, wie beispielsweise olefinische Gruppen, Vinylether- oder Epoxidgruppen. Hier liegt die Summe der Bindemittel (inklusive Reaktiverdünner) in der Regel in einem Bereich von 30 - 90 Gew.% aller Bestandteile der Druckfarbe.

Die erfindungsgemäßen Eiseneffektpigmant-Druckfarben können weiterhin einen oder mehrere Hilfsstoffe beziehungsweise Additive umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Für strahlungshärtbare Druckfarben wird als Additiv weiterhin mindestens ein Fotoinitiator oder ein Fotoinitiatorsystem eingesetzt. Zum Dispergieren der Effektpigmente können Disperglerhilfsmittel eingesetzt werden. Mittels Fettsäuren kann ein Aufschwimmen der Effektpigmente In der gedruckten Schicht erreicht werden, so dass die Pigmente in/an der oberen Grenzfläche der Druckschicht angereichert sind. Hierdurch können vorteilhaft verbesserte Metallic-Effekte erzielt werden. Weiterhin können auch Antiabsetzmittel zugesetzt werden. Derartige Zusätze verhindern die Sedimentation der Effektpigmente. Beispiele umfassen Kieselsäure, Cellulose-Derivate oder auch Wachse.

Zur Formulierung der besonders bevorzugten dünnflüssigen Flexo-, Tief- oder Siebdruckfarben ist der Zusatz von Antiabsetzmitteln meist empfehlenswert, wenngleich nicht immer unbedingt erforderlich. Die Gesamtmenge aller Additive und Hilfsstoffe sollte üblicherweise 20 Gew.% bezüglich der Summe aller Bestandteile der Druckfarbe nicht übersteigen und beträgt bevorzugt 0,1-10 Gew.-%.

Die Herstellung der erfindungsgemäßen Metallic-Druckfarben kann in prinzipiell bekannter Art und Weise durch intensives Vermischen bzw. Dispergieren der Bestandteile in üblichen Apparaturen wie beispielsweise Dissolvem oder Rührwerken erfolgen. Der Fachmann wird beim Einsatz von Dissolvern darauf achten, dass der Energieeintrag nicht zu hoch ist, um ein Beschädigen der erfindungsgemäßen Metalleffektpigmente zu vermeiden. Umgekehrt muss er natürlich so hoch sein, um ein ordnungsgemäßes Dispergieren der Pigmente zu ermöglichen. Falls neben den erfindungsgemäßen Metalleffektpigmenten noch übliche Farbpigmente eingesetzt werden, kann es empfehlenswert sein, diese in einem Teil oder in der Gesamtmenge des Lösemittels, Bindemittels sowie gegebenenfalls der Hilfsstoffe der Metallic-Druckfarbe vorzudispergieren, und die erfindungsgemäßen Eiseneffektpigmente erst später zuzugeben. Auf diese Art und Weise wird eine besonders gute Dispergierung der zusätzlichen Pigmente erreicht, ohne die Eiseneffektpigmente durch zu starke Dispergierung zu schädigen. Anstelle der Pigmente können auch vordispergierte Pigmentkonzentrate zugegeben werden. Ganz besonders elegant kann hierbei auch eine handelsübliche Druckfarbe in geringen Mengen eingesetzt werden, vorausgesetzt, die zugesetzte Druckfarbe ist mit der Rezeptur der Metallic-Druckfarbe verträglich und verschlechtert nicht deren Eigenschaften.

Die nachfolgend aufgeführten Beispiele erläutern die Erfindung ohne sie jedoch zu beschränken:

**Beispiel 1:**

Eine Mischung aus 30 g reduziertem "Carbonyleisenpulver SM" der Fa. BASF AG Ludwigshafen (mittlere Partikelgröße $d_{Grieß,50}$ = 2,7 $\mu$m, $d_{Grieß,10}$-Wert 1,3 $\mu$m, $d_{Grieß,90}$-Wert 4,5 $\mu$m, Eisengehalt 99,8%) und 150 g Testbenzin sowie 0,9 g Ölsäure wurde in eine Topfmühle (Länge: 32 cm, Breite: 19 cm) gefüllt und die Mühle geschlossen. Anschließend wurde 5 h lang mit 2 kg Stahlkugeln (Durchmesser: 1.5 mm) mit 45 U/min vermahlen. Das aus der Mühle entleerte Vermahlungsprodukt wurde mit Testbenzin ausgewaschen und mittels einer Siebung (40 $\mu$m) von den Mahlkugeln getrennt. Der Siebdurchgang wurde mittels einer Nutsche weitgehend von Testbenzin befreit. Von dem erhaltenen Filterkuchen (Feststoffgehalt 70%) wurden 40 g Pigmentpaste zusammen mit 150 g Testbenzin sowie 0,9 g Ölsäure in eine Topfmühle (Länge: 32 cm, Breite: 19 cm) gefüllt. Anschließend wurde in einer zweiten Mahlstufe 15 h lang mit 3 kg Stahlkugeln (Durchmesser: 0,8 mm) bei 38 U/min vermahlen. Das aus der Mühle entleerte Vetmahlungsprodukt wurde mit Testbenzin ausgewaschen und mittels einer Siebung (25 $\mu$m) von den Mahlkugeln getrennt. Das Siebgut wurde mittels einer Nutsche weitgehend von Testbenzin befreit und anschließend mit Testbenzin in einem Labormischer angepastet (ca. 65% Feststoffanteil).

**Beispiel 2:**

Eine Mischung aus 60 g reduziertem "Carbonyleisenpulver SM" (siehe Beispiel 1) der Fa. BASF AG Ludwigshafen und 90 g Testbenzin sowie 6,0 g Ölsäure wurde in eine Topfmühle (Länge: 32 cm, Breite: 19 cm) gefüllt und die Mühle geschlossen: Anschließend wurde 24 h lang mit 2 kg Stahlkugeln (Durchmesser. 0,8 mm) mit 45 U/min vermahlen. Das aus der Mühle entleerte Vermahlungsprodukt wurde mit Testbenzin ausgewaschen und mittels einer Siebung (25 $\mu$m) von den Mahlkugeln getrennt. Das Siebgut wurde mittels einer Nutsche weitgehend von Testbenzin befreit und anschließend mit Testbenzin in einem Labormischer angepastet (ca. 65% Feststoffanteil).

**Beispiel 3:**

Eine Mischung aus 30 g reduziertem "Carbonyleisenpulver SU" der Fa. BASF AG Ludwigshafen (mittlere Partikelgröße $d_{Grieß,50}$ = 1.9 μm, $d_{Grieß,10}$-Wert 0,9 μm, $d_{Grieß,90}$-Wert 3,3 μm, Eisengehalt 99,8%) und 60 g Testbenzin sowie 6,0 g Ölsäure wurde in eine Topfmühle (Länge: 32 cm, Breite: 19 cm) gefüllt und die Mühle geschlossen. Anschließend wurde 24 h lang mit 2 kg Stahlkugeln (Durchmesser: 0,8 mm) mit 45 U/min vermahlen. Das aus der Mühle entleerte Vermahlungsprodukt wurde mit Testbenzin ausgewaschen und mittels einer Siebung (25 μm) von den Mahlkugeln getrennt. Das Siebgut wurde mittels einer Nutsche weitgehend von Testbenzin befreit und anschließend mit Testbenzin in einem Labormischer angepastet (ca. 65% Feststoffanteil).

**Beispiel 4:**

Eine Mischung aus 100 g reduziertem Eisengriess MV 144 (Fa. NMD New Materials Development, St. Panthaleon, Österreich) (mittlere Partikelgröße $d_{Grieß,50}$ = 2,0 μm, $d_{Grieß,10}$-Wert 0,5 μm, $d_{Grieß,90}$-Wert 3,0 μm, Eisengehalt 98,5%) und 380 g Testbenzin sowie 4 g Ölsäure wurde in eine Topfmühle (Länge: 32 cm, Breite: 19 cm) gefüllt und die Mühle geschlossen, Anschließend wurde 32 h lang mit 4 kg Stahlkugeln (Durchmesser: 1,5 mm) 43 U/min vermahlen. Das aus der Mühle entleerte Vermahlungsprodukt wurde mit Testbenzin ausgewaschen und mittels einer Siebung (25 μm) von den Mahlkugeln getrennt. Das Siebgut wurde mittels einer Nutsche weitgehend von Testbenzin befreit und anschließend mit Testbenzin in einem Labormischer angepastet (ca. 65% Feststoffanteil).

**Vergl. Beispiel 5:**

**Kommerziell erhältliches Perricon 200 (Fa. Eckart GmbH) hergestellt gemäß** DE 101 14 446 A1**.**
Die erhaltenen Effektpigmente zeigen einen ausgeprägten metallischen Glanz und die magnetische Permeabilität von Weicheisenpulver.
Aus Laserstrahlbeugungsmessungen (Cilas-Messungen; Gerät Cilas 1064) wurde die Größenverteilung ermittelt.
Die Proben der erfindungsgemäßen Beispiele 1-4 und des Vergleichsbeispieles 5 wurden zur näheren Bestimmung der Teilchendicken mittels eines Feldionen-Rasterelektronenmikroskops charakterisiert.
Für die Bestimmung der Dickenverteilung mittels REM wurden die Proben folgendermaßen präpariert:

Die erfindungsgemäßen und herkömmlichen aus einer üblichen Nassvermahlung erhaltenen Eiseneffektpigmente, die jeweils als Paste oder Filterkuchen vorlagen, wurden jeweils zunächst mit Aceton gewaschen und dann ausgetrocknet.

Ein in der Elektronenmikroskopie übliches Harz, beispielsweise TEMPFIX (Gerhard Neubauer Chemikalien, D-48031 Münster, Deutschland), wurde auf einen Probenteller aufgebracht und auf einer Heizplatte bis zum Erweichen erhitzt.

Nachfolgend wurde der Probenteller von der Heizplatte genommen und das jeweilige Eisenpulver auf das erweichte Harz gestreut. Das Harz wurde durch die Abkühlung wieder fest und die aufgestreuten Eisenpigmente konnten - bedingt durch das Wechselspiel zwischen Adhäsion und Schwerkraft - nahezu senkrecht stehend und fixiert auf dem Probenteller präpariert werden. Dadurch konnten die Pigmente im Elektronenmikroskop seitlich gut vermessen werden. Bei der Vermessung der Dicke wurde der azimuthale Winkel α des Pigmentes zu einer zur Oberfläche normalen Ebene geschätzt und bei der Dickenauswertung nach der Formel

$$h_{eff} = h_{mess} / \cos \alpha$$

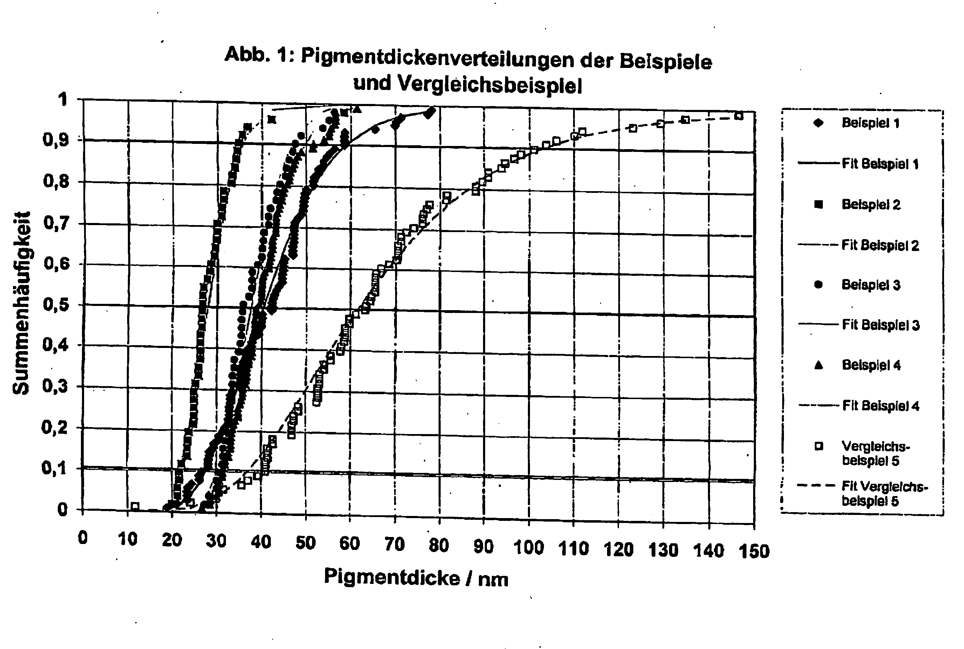

berücksichtigt.
Von den $h_{off}$-Werten wurde anhand der relativen Häufigkeiten die Summenverteilungskurve erstellt. Es wurden jeweils 100 Teilchen ausgezählt.
Die Summendurchgangsverteilungen der Dickenverteilung der erfindungsgemäßen Beispiele und des Vergleichsbeispieles 5 sind in Abb. 1 dargestellt. Statistische Analysen ergaben, dass die Summendurchgangskurve ab 75 bis 100 Teilchen für die erfindungsgemäßen Pigmente und konventionelle Pigmente aus der Nassmahlung weitgehend konstant war. Deutlich sind die viel geringeren Teilchendicken der gesamten Teilchenverteilungen der erfindungsgemäßen Beispiele im Vergleich zu Ferricon 200 zu erkennen. Die Messwerte wurden jeweils mit einer log-Normalfunktion gefittet.

Aus der nachfolgenden **Tab.1** ist die physikalische Charakteristik der erfindungsgemäßen Eiseneffektpigmente im Vergleich zu kommerziell gehandelten Eiseneffektpigmenten "Ferricon 200" der Fa. Eckart anhand der $d_{10}$-, $d_{50}$- und $d_{90}$-Werte der Größenverteilung (Cilas) und die Kennwerte $h_{10}$, $h_{50}$ und $h_{90}$ und die daraus berechneten Span-Werte der Dickenmessung aus REM-Untersuchungen zusarnmengestellt. Die $h_{10}$, $h_{50}$ und $h_{90}$ Werte wurden aus den Originaldaten berechnet (Quantitfunktion in einem Ecxelprogramm).

Die Längsausdehnung d der Eiseneffektpigmente wurde mit Hilfe eines Lasergranulometers (Cilas 1064, Firma Cilas, Frankreich) bestimmt und als Maß der mittleren Längsausdehnung der $d_{50}$-Wert der Summendurchgangsverteilung in $\mu$m gewählt.

Ferner wurde die spezifische Oberfläche mittels der BET-Methode ermittelt.

**Tab. 1: Physikalische Charakterisierung der Eiseneffektpigmente**

| Beispiele | Größen | | | Dicken | | | | BET / $m^2$/g |
|---|---|---|---|---|---|---|---|---|
| | $d_{10}$ / $\mu$m | $d_{50}$ / $\mu$m | $d_{90}$ / $\mu$m | $h_{10}$ / nm | hso / nm | $h_{90}$ / nm | Span $\Delta$h Dickenverteilung | |
| Beispiel 1 | 8,1 | 15,0 | 25,3 | 28 | 42 | 57 | 69% | 8.4 |
| Beispiel 2 | 8,0 | 14,0 | 21,0 | 22 | 31 | 53 | 100% | 8.1 |
| Beispiel 3 | 6,5 | 11,0 | 16,0 | 31 | 36 | 47 | 44% | 12,6 |
| Beispiel 4 | 5,6 | 11,0 | 16,8 | 32 | 39 | 52 | 51% | 9,2 |
| Vergleichs-beispiel 5 | 10,0 | 18,0 | 28,0 | 41 | 63 | 99 | 92% | 4,4 |

Die Werte der Tab. 1 belegen, dass die erfindungsgemäßen Eiseneffektpigmente jeweils einen geringeren Mittelwert $h_{50}$ der Dickenverteilung und vor allem einen geringeren $h_{90}$-Wert aufweisen als das kommerziell erhältliche Produkt des Vergleichabeispiels 5 (Ferricon 200).

Die nachfolgende **Tab. 2** zeigt das Deckvermögen der erfindungsgemäßen, plättchenförmigen Eiseneffektpigmente im Vergleich zu kommerziell gehandelten Eisenpigmenten "Ferricon 200" der Fa. Eckart. Das Deckvermögen ist anhand des Helligkeitsunterschiedes bei einem Einfallswinkel von 45° und einem Beobachtungswinkel von 110° auf Basis von Rakelabzügen auf Kontrastkarton in Cellit Lack dargestellt.

**Tab. 2: Ergebnisse zur Deckfähigkeit (Rakelabzüge)**

| Rakelabzug auf Kontrastkarton in Cellit Lack Rakel 50$\mu$m | Beispiel 1 | Beispiel 2 | Beispiel 3 | Beispiel 4 | Konventionelles "Ferricon 200" (Vergleichs-beispiel 5) |
|---|---|---|---|---|---|
| Farbmessung $\Delta$L* 110° bei 12,5% Pigment | 0,1 | 0,1 | 0,0 | 0,1 | 0,8 |
| Farbmessung $\Delta$L* 110° bei 10,0% Pigment | 0,2 | 0,1 | 0,1 | 0,0 | 1,2 |
| Farbmessung $\Delta$L* 110° bei 8,3% Pigment | 0,1 | 0,1 | 0,0 | 0,3 | 3,8 |
| Farbmessung $\Delta$L* 110° bei 8,7% Pigment | 0,1 | 0,4 | 0,1 | 0,1 | 6,7 |
| Farbmessung $\Delta$L* 110° bei 5,8% Pigment | 0,7 | 0,7 | 0,0 | 0,9 | 8,4 |
| Farbmessung $\Delta$L* 110° bei 5.0% Pigment | 1,5 | 2,4 | 0,1 | 0,5 | 15,2 |
| Die %-Angaben in der Tabelle sind Gew.-%, jeweils bezogen auf das Gesamtgewicht des Lackes. | | | | | |

Die Tabellenwerte belegen die wesentlich höhere Deckkraft der erfindungsgemäßen Eiseneffektpigmente im Vergleich zu den kommerziell gehandelten Eisenpigmente "Ferricon 200" der Fa. Eckart im Anwendungsmedium. Die verbesserte Deckfähigkeit ist vor allem auf die geringere Dicke der Pigmente zurückzuführen.

**Beispiele 6 - 9: Tiefidruckfarben**

Die erfindungsgemäßen Pigmente der Beispiele 1 bis 4 wurden jeweils in eine Tiefdruckfarbe eingearbeitet. Die Tiefdruckfarbe besaß ein kommerziell erhältliches Polyvinylbutyral-Bindemittel und enthielt als Lösemittel ein Ethylacetat/Methoxypropanol-Gemisch.

Die Viskosität wurde auf 20 s im DIN-4-Auslaufbecher eingestellt. Die Pigmentlerungshöhe betrug ca. 16 -17 Gew.-% Eiseneffektpigmant bezogen auf die gesamte Formulierung.

**Vergleichsbeispiel 10:**

Eine Tiefdruckformulierung entsprechend der Beispiele 6 - 9 mit Vergleichsbeispiel 5 (Ferricon 200).

Zur weiteren Charakterisierung wurden mit den Tiefdruckfarben der Beispiele 6 -10 sogenannte Rückseitenapplikationen (Spiegelapplikationen) durchgeführt. Diese wurden durch Bedrucken einer MELINEX 400 Folie (PET-Frolie, 50 μm) mit einer Tiefdruckfarbe hergestellt.

Zum Auftragen der Tiefdruckfarbe wurde eine Rakel mit einer Rillentiefe von 24 μm verwendet.

Die Andrucke wurden hinsichtlich ihres Glanzes von der Rückseite, d.h. der Folienseite her charakterisiert. Auf dieser Seite bildete sich der gewünschte Metallsplegeleffekt aus.

Die Rückseitenapplikationen wurden optisch durch eine Glanzmessung bei 20° in Anlehnung an die DIN 67 530 (Gerät: micro-TRI-gloss von Byk-Gardner, D-82538 Geretsried, Deutschland) charakterisiert. Kalibriert wurde hier mittels Dunkelkalibrierung sowie einer schwarzen Spiegelglasplatte mit Werten von 92 für 20°.

Farbmetrischen Daten von mit Eiseneffektpigmente gemäß den erfindungsgemäßen Beispielen bzw. dem Vergleichsbeispiel 5 pigmentierten Spiegelapplikationen sind in nachfolgender **Tab. 3** erfasst:

Weiterhin wurden Helligkeitsmessungen (CIE Lab 1973) gemäß Herstellerangaben durchgeführt und der Flopindex nach DuPont berechnet

$$\text{Flopindex} = 2{,}68 \times (L^*_{15°} - L^*_{110°})^{1{,}11} / L^{*0{,}86}_{45°}$$

Die Helligkeitsmessungen wurden mit einem Gerät der Fa. X-Rite durchgeführt (Lichtquelle: D65, 10° Normalbeobachter)

**Tab. 3: Optische Eigenschaften der Rückseitenapplikationen**

| Probe | Glanz 20° | $L^*_{15°}$ | $L^*_{45°}$ | $L^*_{110°}$ | Flopindex (DuPont) | Visueller Eindruck |
|---|---|---|---|---|---|---|
| Beispiel 6 (entspr. 1) | 220 | 92,8 | 26,1 | 4,4 | 23,5 | Glänzend, dunkler Flop |
| Beispiel 7 (entspr. 2) | 285 | 88,8 | 22,9 | 3,7 | 25,2 | Hochglänzend, dunkler Flop |
| Beispiel 8 (entspr. 3) | 290 | 78,7 | 22 | 4,4 | 22,4 | Sehr ausgeprägter dunkler Glanz |
| Beispiel 9 (entspr. 4) | 225 | 91 | 26,9 | 5,2 | 22,1 | Glänzend, dunkler Flop |
| Vergleichs-beispiel 10 (entspr.5) | 201 | 102,6 | 30,6 | 8,9 | 21,8 | Geringer Glanz, weisser Flop |

Die Eiseneffektpigmente der erfindungsgemäßen Beispiele weisen durchweg einen höheren Glanz auf als Ferricon 200. Der Flopindex ist ebenfalls höher. Auffallend ist jedoch, dass der Helligkeitswert $L^*_{110}$. bei einem Beobachtungswinkel von 110° extrem niedrig ist und Werte unterhalb von nur 6 annimmt. Derartige Oberflächen werden subjektiv als praktisch schwarz empfunden. Die Eiseneffektpigmente der erfindungsgemäßen Beispiele weisen mithin einen stark metallischen Glanz und gleichzeitig einen sehr hohen Henigkeitsftop auf. Bei steilen Einfalls- und/oder Beobachtungswinkeln erscheinen die Applikationen dunkel bis schwarz. Dies wird subjektiv als ein sehr attraktiver "dunkler Flop" empfunden,

Insgesamt sind die erfindungsgemäßen Eiseneffektpigmente neue Effektpigmente mit bisher unbekannten, sehr attraktiven koloristischen Eigenschaften.

Die einzigen Pigmente mit ähnlichen Eigenschaften sind aus der DE 10 2007 007908 A1 bekannt. Diese Pigmente sind jedoch ausschließlich durch das sehr viel teurere PVD-Verfahren zugänglich.

Die neuen, einzigartigen optischen Eigenschaften der erfindungsgemäßen Eisenpigmente sind auf ihre geringe Dicke zurückzuführen. Hierbei ist nicht nur der Mittelwerte der Dicke ($h_{50}$) entscheidend, sondern vor allem, dass in der gesamten Dickenverteilung keine zu dicken Pigmente vorhanden sind. Dies lässt sich durch den $h_{90}$-Wert der Dickenverteilung ausdrücken.

In diesem Fall neigen die Pigmente offenbar dazu, sich spontan im Applikationsmedium zu einem geschlossenen Metallpigmentfilm zusammenzuschließen. Dieses Verhalten ist bei Aluminiumpigmenten von den PVD-Pigmenten bekannt und unter anderem In J. Seubert und A. Fetz, "PVD Aluminium Pigments: Superior Brillance for Coatings and Graphic Arts", Coatings Journal, Bd. 84, A6 225-264, Juli 2001, Seiten 240-245. beschrieben.

Dickere Pigmente stören diese Ordnung und können aufgrund ihrer Sperrigkeit die Orientierung anderer Pigmente stören. Dies geht dann mit entsprechenden Glanzverlusten und einem Verlust der Brillanz einher.

Beispiele zur Passivierung der erfindungsgemäßen Eisenpigmente:

**Beispiele 11 - 14** (SiO$_2$- beschichtetes Eisen):

55,1 g einer Paste mit Eisenpigmenten nach jeweils den Beispielen 1 bis 4 (Metallpigmentanteil: 27,6 g) wurden in 375 ml Isopropanal dispergiert und auf Siedetemperatur gebracht. Es wurden 13,0 g Tetraethoxysilan zugegeben.

Anschließend dosierte man über einen Zeitraum von 3 h eine Lösung von 5,4 g 25 %-igen NH$_3$ in 9,0 g Wasser hinzu. Nach weiteren 3 h wurde auf Raumtemperatur abgekühlt und die Suspension über einen Büchnertrichter abgenutscht Anschließend wurde das Produkt über Nacht in einem Vakuumtrockenschrank bei 100°C getrocknet.

In gängigen Gasungstests weist das Produkt eine ausgezeichnete Gasungsstabilität auf und ist damit für wässrige Lacksystem gut geeignet

**Beispiele 15 - 18** (Chromatiertes Eisen):

18 g einer Chromsäurelösung wurden hergestellt, indem man 4,5g CrO$_3$ in 13,5 g volleMsalztes Wasser auflöst.

In einem 1 L-Reaktor wurden 220g vollentsalztes Wasser auf 90°C aufgeheizt. Unter heftigem Rühren (Rühraggregat: Stollenscheibe) gab man zunächst 21g Butylglykol und anschließend 125g der jeweils den Beispielen 1 bis 4 beschriebene Eisenpigmente in Form einer Testbenzinpaste mit einem Festkörperanteil von 70%, hinzu. Wenige Minuten später erfolgte die Zugabe der Chromsäurelösung bei einer Reaktionstemperatur von 80°C. Man lässt unter starkem Rühren das Gemisch weitere 50 min lang reagieren. Dann lässt man 30 min lang abkühlen und dekantiert in einem Becherglas das Reaktionsgemisch mehrmals mit je 250ml einer 5%igen VE-H$_2$0/Butylglykol-Lösung, bis keine Gelbfärbung der überstehenden Lösung mehr auftritt. Anschließend wird das Produkt auf einer Nutsche abfiltriert und mit viel Wasser gewaschen.

In gängigen Gasungstests weist das Produkt eine ausgezeichnete Gasungsstabilität auf und ist damit für wässrige Lacksystem gut geeignet.

**Patentansprüche**

1. Eiseneffektpigmente,
   **dadurch gekennzeichnet,**
   **dass** die Eiseneffektpigmente eine über Dickenauszählung mit
   Rasterelektronenmikroskopie (REM) ermittelte Dickenverteilung in der Darstellung als Summendurchgangsverteilung

   a) einen $h_{50}$-Wert aus einem Bereich von 10 bis 55 nm
   b) einen $h_{90}$-Wert aus einem Bereich von 20 bis 80 nm aufweisen.

2. Eiseneffektpigmente nach Anspruch 1,
   **dadurch gekennzeichnet,**
   **dass** die Eiseneffektpigmente einen, $h_{50}$-Wert aus einem Bereich von 12 bis 50 mm aufweisen.

3. Eiseneffektpigmente nach einem der vorstehenden Ansprüche,
**dadurch gekennzeichnet,**
**dass** die Eiseneffektpigmente einen $h_{90}$-Wert aus einem Bereich von 25 bis 70 nm aufweisen.

4. Elseneffektpigmente nach einem der vorstehenden Ansprüche,
**dadurch gekennzeichnet,**
**dass** die Eiseneffektpigmente einen $h_{98}$-Wert von kleiner als 100 nm aufweisen.

5. Eiseneffektpigmente nach einem der vorstehenden Ansprache,
**dadurch gekennzeichnet,**
**dass** die Eiseneffektpigmente einen $h_{10}$-Wert aus einem Bereich von 8 bis 40 nm aufweisen.

6. Eiseneffektpigmente nach einem der vorstehenden Ansprüche,
**dadurch gekennzeichnet,**
**dass** die Eiseneffektpigmente eine mittlere Größe $d_{50}$ aus einem Bereich von 5 bis 40 $\mu$m aufweisen.

7. Eiseneffektpigmente nach einem der vorherigen Ansprüche,
**dadurch gekennzeichnet,**
**dass** die Eiseneffektpigmente mit einer passivierenden Inhibitor- und/oder Korrosionsschutzschicht belegt sind.

8. Eiseneffektpigmente nach einem der vorherigen Ansprüche,
**dadurch gekennzeichnet,**
**dass** die Eiseneffektpigmente als Pulver, vorzugsweise nicht-staubendes Pulver, vorzugsweise als Paste oder in kompaktierter Form als Granulate, Pellets, Tabletten, Würstchen oder Briketts vorliegen.

9. Verfahren zur Herstellung von Eiseneffektpigmenten nach einem der Ansprüche 1 bis 8,
wobei das Verfahren folgenden Verfahrensschritt umfasst:

Vermahlen eines Eisengrießes mit einer Korngrößenverteilung, welche einen $d_{Grieß,10} \leq 2,0$ $\mu$m, einen $d_{Grieß,50} \leq 5,0$ $\mu$m und einen $_{Grieß,90} \leq 7,0$ $\mu$m aufweist,
unter Verwendung eines Mahlwerks in Gegenwart von Lösemittel und
Schmierstoffen und kugelförmigen Mahlkörpern.

10. Verfahren nach Anspruch 9,
**dadurch gekennzeichnet,**
**dass** der Eisengrieß eine Komgrößenverteilung mit einem $d_{Grieß,10} \leq 1,6$ $\mu$m, einem $d_{Grieß,50} \leq 3,3$ $\mu$m und einem $d_{Grieß,90} \leq 5,5$ $\mu$m, aufweist.

11. Verfahren nach einem der Ansprüche 9 oder 10,
**dadurch gekennzeichnet,**
**dass** die kugelförmigen Mahlkörper einen mittleren Durchmesser von 0,5 bis 1,5 mm aufweisen.

12. Verfahren nach einem der Ansprüche 9 bis 11,
**dadurch gekennzeichnet,**
**dass** die gesamte Mahldauer über 12 bis 100 h beträgt.

13. Verfahren nach einem der Ansprüche 9 bis 12,
**dadurch gekennzeichnet,**
**dass** die nach dem Vermahlen des Eisengrieß erhaltenen, optional größenklassierten, Eisenpigmente in eine kompakte Form, vorzugsweise Paste, Granulate, Tabletten, Würstchen, Briketts oder Pellets, überführt werden.

14. Verwendung von Eiseneffektpigmenten nach einem der Ansprüche 1 bis 8 als Effektpigment in Coatings, Anstrichen, Lacken, Druckfarben, Pulverlacken, Kunststoffen, Wertschriften- und Sicherheitsdrucken, Kosmetik und Reflektormaterial bei der Herstellung mehrschichtiger Effektpigmente.

15. Verwendung von Eiseneffektpigmenten nach Anspruch 14 als magnetisch orientierbares Effektpigment in Coatings, Anstrichen, Lacken, Druckfarben, Pulverlacken, Kunststoffen, Wertschriften- und Sicherheitsdrucken oder kosmetischen Anwendungen.

**16.** Druckfarbe enthaltend Eiseneffektpigmente nach einem der Ansprüche 1 bis 8.

**17.** Beschichteter Gegenstand, enthaltend oder aufweisend Eiseneffektpigmente nach einem der Ansprüche 1 bis 8.

**Claims**

**1.** Iron effect pigments,
**characterised in that**
the iron effect pigments have a thickness distribution plotted on the basis of cumulative mean distribution determined by a thickness count using scanning electron microscopy (SEM)

  a) with a $h_{50}$ value within a range of from 10 to 55 nm
  b) with a $h_{90}$ value within a range of from 20 to 80 nm.

**2.** Iron effect pigments as claimed in claim 1,
**characterised in that**
the iron effect pigments have a $h_{50}$ value within a range of from 12 to 50 nm.

**3.** Iron effect pigments as claimed in one of the preceding claims, **characterised in that**
the iron effect pigments have a $h_{90}$ value within a range of from 25 to 70 nm.

**4.** Iron effect pigments as claimed in one of the preceding claims, **characterised in that**
the iron effect pigments have a $h_{98}$ value of less than 100 nm.

**5.** Iron effect pigments as claimed in one of the preceding claims, **characterised in that**
the iron effect pigments have a $h_{10}$ value within a range of from 8 to 40 nm.

**6.** Iron effect pigments as claimed in one of the preceding claims, **characterised in that**
the iron effect pigments have a mean size $d_{50}$ within a range of from 5 to 40 $\mu$m.

**7.** Iron effect pigments as claimed in one of the preceding claims, **characterised in that**
the iron effect pigments are coated with a passivating inhibitor and/or anti-corrosion layer.

**8.** Iron effect pigments as claimed in one of the preceding claims, **characterised in that**
the iron effect pigments are in the form of a powder, preferably a non-dust generating powder, preferably in the form of a paste or in compacted form as granulates, pellets, tablets, small cylinders or briquettes.

**9.** Method of manufacturing iron effect pigments as claimed in one of claims 1 to 8,
which method comprises the following steps:

  grinding iron fines with a grain size distribution based on $d_{fines,10} \leq 2.0$ $\mu$m, a $d_{fines,50} \leq 5.0$ $\mu$m and a $d_{fines,90} \leq 7.0$ $\mu$m using a grinding mill in the presence of solvents and lubricants and spherical grinding media.

**10.** Method as claimed in claim 9,
**characterised in that**
the iron fines have a grain size distribution based on $d_{fines,10} \leq 1.6$ $\mu$m, $d_{fines,50} \leq 3.3$ $\mu$m and $d_{fines,90} \leq 5.5$ $\mu$m.

**11.** Method as claimed in one of claims 9 to 10,

the spherical grinding media have a mean diameter of 0.5 to 1.5 mm.

**12.** Method as claimed in one of claims 9 to 11,
**characterised in that**
the total grinding duration is 12 to 100 h.

**13.** Method as claimed in one of claims 9 to 12,
**characterised in that**

the iron pigments obtained after grinding, optionally having been screened for size, are converted to a compact form, preferably a paste, granulates, tablets, small cylinders, briquettes or pellets.

14. Use of iron effect pigments as claimed in one of claims 1 to 8 as effect pigment in coatings, paints, varnishes, printing inks, powdered varnishes, plastics, bond and security printing, cosmetics and reflector material for producing multi-layered effect pigments.

15. Use of iron effect pigments as claimed in claim 14 as magnetically orientable effect pigment in coatings, paints, varnishes, printing inks, powdered varnishes, plastics, bond and security printing or cosmetic applications.

16. Printing ink containing iron effect pigments as claimed in one of claims 1 to 8.

17. Coated object containing or incorporating iron effect pigments as claimed in one of claims 1 to 8.

**Revendications**

1. Pigments de fer à effet,
   **caractérisés en ce que**
   les pigments de fer à effet présentent une répartition des épaisseurs, déterminée par microscopie électronique à balayage (MEB), par l'intermédiaire d'un comptage d'épaisseurs avec, dans la représentation comme distribution somme des fractions passantes

   a) une valeur $h_{50}$ dans un intervalle de 10 à 55 nm,
   b) une valeur $h_{90}$ dans un intervalle de 20 à 80 nm.

2. Pigments de fer à effet selon la revendication 1,
   **caractérisés en ce que**
   les pigments de fer à effet présentent une valeur $h_{50}$ dans un intervalle de 12 à 50 nm.

3. Pigments de fer à effet selon l'une quelconque des revendications précédentes, **caractérisés en ce que**
   les pigments de fer à effet présentent une valeur $h_{90}$ dans un intervalle de 25 à 70 nm.

4. Pigments de fer à effet selon l'une quelconque des revendications précédentes, **caractérisés en ce que**
   les pigments de fer à effet présentent une valeur $h_{98}$ de moins de 100 nm.

5. Pigments de fer à effet selon l'une quelconque des revendications précédentes, **caractérisés en ce que**
   les pigments de fer à effet présentent une valeur $h_{10}$ dans un intervalle de 8 à 40 nm.

6. Pigments de fer à effet selon l'une quelconque des revendications précédentes, **caractérisés en ce que**
   les pigments de fer à effet présentent une taille moyenne $d_{50}$ dans un intervalle de 5 à 40 $\mu$m.

7. Pigments de fer à effet selon l'une quelconque des revendications précédentes, **caractérisés en ce que**
   les pigments de fer à effet sont revêtus d'une couche passivante inhibitrice ou anticorrosion.

8. Pigments de fer à effet selon l'une quelconque des revendications précédentes, **caractérisés en ce que**
   les pigments de fer à effet se présentent comme poudre, ne soulevant de préférence pas de poussière, de préférence comme pâte ou sous forme compactée comme granulés, pellets, comprimés, petits boudins ou briquettes.

9. Procédé de préparation de pigments de fer à effet selon l'une quelconque des revendications 1 à 8, le procédé comprenant l'étape de procédé suivante :

   Broyage d'une « semoule » (« Grieß ») de fer avec une répartition granulométrique qui présente un $d_{Grieß,10} \leq$ 2,0 $\mu$m, un $d_{Grieß,50} \leq 5,0$ $\mu$m et un $d_{Grieß,90} \leq 7,0$ $\mu$m, moyennant l'utilisation d'un dispositif de broyage en présence de solvants et de lubrifiants et de corps de broyage sphériques.

10. Procédé selon la revendication 9,
    **caractérisé en ce que**

la semoule de fer présente une répartition granulométrique avec un $d_{Grieß,10} \leq 1,6\ \mu$m, un $d_{Grieß,50} \leq 3,3\ \mu$m et un $d_{Grieß,90} \leq 5,5\ \mu$m.

11. Procédé selon l'une quelconque des revendications 9 ou 10, **caractérisé en ce que**
les corps de broyage sphériques présentent un diamètre moyen de 0,5 à 1,5 mm.

12. Procédé selon l'une quelconque des revendications 9 à 11,
**caractérisé en ce que**
le total de la durée du broyage est compris entre plus de 12 h et 100 h.

13. Procédé selon l'une quelconque des revendications 9 à 12,
**caractérisé en ce que**
les pigments de fer à effet obtenus après le broyage de la semoule de fer, le cas échéant classés par tailles, sont transformés en une forme compacte, de préférence une pâte, des granulés, des comprimés, de petits boudins, des briquettes ou des pellets.

14. Utilisation de pigments de fer à effet selon l'une quelconque des revendications 1 à 8 comme pigments à effet dans des enduits, des peintures, des laques, des encres d'imprimerie, des peintures en poudre, des plastiques, des imprimés de titres financiers et sécurisés, des produits cosmétiques et comme matériau réfléchissant lors de la production de pigments à effet multicouches.

15. Utilisation de pigments de fer à effet selon la revendication 14 comme pigments à effet orientables magnétiquement dans des enduits, des peintures, des laques, des encres d'imprimerie, des peintures en poudre, des plastiques, des imprimés de titres financiers et sécurisés ou dans des applications cosmétiques.

16. Encre d'imprimerie contenant des pigments de fer à effet selon l'une quelconque des revendications 1 à 8.

17. Objet revêtu, contenant ou comprenant des pigments de fer à effet selon l'une quelconque des revendications 1 à 8.

# Abb. 1: Pigmentdickenverteilungen der Beispiele und Vergleichsbeispiel

Legend:
- ◆ Beispiel 1
- —— Fit Beispiel 1
- ■ Beispiel 2
- – – Fit Beispiel 2
- ● Beispiel 3
- —— Fit Beispiel 3
- ▲ Beispiel 4
- – · – Fit Beispiel 4
- ☐ Vergleichs-beispiel 5
- – – – Fit Vergleichs-beispiel 5

X-axis: Pigmentdicke / nm

Y-axis: Summenhäufigkeit

EP 2 157 138 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10114446 A1
- DE 10114445 A1
- DE 102007007908 A1
- DE 10315775 A1
- EP 1621586 A1
- US 20060088484 A1
- DE 202004005921 U1
- WO 0236695 A
- WO 0236697 A

**In der Beschreibung aufgeführte Nicht-Patentliteratur**

- **Hollemann, Wiberg.** Lehrbuch der Anorganischen Chemie. Walter de Gruyter & Co Verlag, 1985, vol. 91- 100, 1.127
- **J. Seubert ; A. Fetz.** PVD Aluminium Pigments: Superior Brillance for Coatings and Graphic Arts. *Coatings Journal,* Juli 2001, vol. 84 (A6), 225-264